# EUROPEAN PATENT SPECIFICATION

(11) **EP 2 801 264 B1**
(45) Date of publication and mention of the grant of the patent: **30.05.2018**
(21) Application number: 12864309.5
(22) Date of filing: 28.08.2012
(51) Int. Cl.: A23L 2/56, A23L 27/00, A23L 27/10, A23L 27/21

(54) **SALTY TASTE ENHANCER**
SALZGESCHMACKSVERSTÄRKER
RENFORCEUR DE GOÛT SALÉ

(30) Priority: 06.01.2012 JP 2012001558; 23.03.2012 JP 2012068429; 28.05.2012 JP 2012121411; 19.07.2012 JP 2012160921; 19.07.2012 JP 2012160922
(43) Date of publication of application: 12.11.2014
(73) Proprietor: Kaneka Corporation, Osaka-shi, Osaka 530-8288 (JP)
(72) Inventor: SUGISE, Takeshi, Takasago-shi Hyogo 676-8688 (JP); MIZOGUCHI, Noriko, Takasago-shi Hyogo 676-8688 (JP); ODAHARA, Tsutomu, Tokyo 107-6025 (JP); EGUSA, Ai, Musashino-shi Tokyo 180-8602 (JP); NISHIMURA, Toshihide, Musashino-shi Tokyo 180-8602 (JP)
(74) Representative: Isarpatent
(86) International application number: PCT/JP2012/071739
(87) International publication number: WO 2013/103031

(56) References cited:
- EP-A1- 2 305 048
- GB-A- 1 303 807
- JP-A- 2002 345 430
- JP-A- 2010 142 147
- JP-A- 2010 142 147
- JP-A- 2010 142 148
- JP-A- 2011 072 307
- JP-A- 2011 229 524
- JP-A- 2012 000 105
- MANS. BOELENS ET AL: "Volatile flavor compounds from onion", JOURNAL OF AGRICULTURAL AND FOOD CHEMISTRY, vol. 19, no. 5, 1 May 1971 (1971-05-01), pages 984-991, XP055206161, ISSN: 0021-8561, DOI: 10.1021/jf60177a031

## Description

### Technical Field

The present invention relates to a taste improvement technique of food and drink; more particularly to a salty taste enhancer which can reduce an amount of a salt used without deteriorating a salty taste by adding it to food and drink together with a salt, a production method thereof, food and drink whose salty taste is enhanced using the salty taste enhancer, and a method for enhancing a salty taste in food and drink.

### Background Art

A salt provides a salty taste, which is essential to food, together with palatability and a rich taste of food and drink, and is a seasoning which is essentially used for enhancing the flavor of a food material by adding a small amount of the salt as a secret ingredient. In addition, the salt is formed of sodium and chlorine, which are essential for life support, and thus it is a food material essential to health in humans and animals. On the other hand, however, a high salt intake causes various lifestyle diseases such as hypertension and gastric cancer, and reduced-salt foods, in which an amount of the salt added is reduced, have recently received attention.

If the amount of the salt used is just reduced, however, such food and drink have not only a weak salty taste but also a fuzzy flavor due to the deteriorated flavor of the food as a whole. Specifically, it is important to reduce the amount of the salt used while both of the impact of a first taste and the retention of an aftertaste are maintained when food and drink are drunk or eaten.

Hitherto, as for reduction of salt used in food and drink, for example, Patent Document 1 has disclosed a salty taste seasoning having a low sodium content in which a part of a salt (sodium chloride) component is substituted by potassium chloride. Patent Document 2 discloses that a taste-imparting agent which includes liquid extract, obtained by extracting shallot or onion with an alcoholic solvent and removing the solvent from the resulting extract, which enhances flavor of a prepared food, which masks factors generated in preparation steps of the prepared food, such as the sense of roasting, acidity, a feeling of extract, and a flour-like feeling, and which provides a feeling of rich cooking and deep rich taste which exist inherently in the prepared food such as curry, stew, or white sauce. Patent Document 3 discloses a taste enhancer such as a salty taste or rich taste enhancer combining a spilanthol-containing extract, which is collected by extraction or distillation of herbs or anthocodium of Spilanthes acmella or Spilanthes oleracea, with an Allium plant such as garlic or onion. Patent Document 4 discloses a salty taste enhancer for food and drink including an acidic peptide, which obtained by hydrolysis and deamidation of a protein, as an effective component. Patent documents 5 and 6 disclose an onion extract which can be used in food products, giving rich sweetness and strong body taste.

### Citation List

### Patent Literatures

Patent Document 1: JP-A No. S59-198953
Patent Document 2: JP-A No. 2002-186448
Patent Document 3: Japanese Patent No. 4508932
Patent Document 4: Japanese Patent No. 4445691
Patent Document 5: JP 2010 142147 A
Patent Document 6: JP 2010 142148 A

### Summary of Invention

### Technical Problem

As described above, a variety of methods for reducing an amount of a salt have hitherto been studied and proposed in food and drink. According to the method in which a part of the sodium chloride component is substituted by potassium chloride, however, there is no impact of the first taste and moreover there is uncomfortable bitter taste or harsh taste in the aftertaste, and thus there is a limit on the use of the potassium chloride. The taste-imparting agents or the taste enhancers using the plant extract as described above have an improvement or increase effect in flavor such as palatability, but satisfactory effects cannot be obtained in terms of the salty taste enhancing effect. The salty taste enhancer including the acidic peptide as an effective component requires a lot of steps including a hydrolysis step by a chemical treatment using an acid or alkali or an enzyme treatment, a deamidation treatment, and the like, and has defects in which the preparation steps are complicated, it takes a long time for the production thereof, and the production cost is high.

In view of the conventional technique of enhancing a salty taste in food and drink as described above, the present invention aims at providing a salty taste enhancer capable of exhibiting an excellent salty taste enhancing effect, and enhancing the impact of the first taste and the retention of the aftertaste even if an amount of a salt used is reduced, and being obtained in simple production steps.

### Solution to Problem

The present inventors have variously studied a flavor of food and drink, and have developed a plant extract having a rich taste generated in cooking with heat, in particular a strong rich taste in cooking onion with heat (see JP-A No. 2010-142147 and JP-A No. 2010-142148). This food product can be obtained by cooking an onion starting material, which has been concentrated to a Brix value of about 70, until the product temperature reaches 140°C, while the material is moved in a state in which it is expanded to a thin-film state. The onion extract obtained in this manner plentifully have rich sweetness, obtained by heating onion, and an aroma component, contributing to a rich taste, whereby a food product having a strong rich taste can be provided by adding the onion extract.

According to the method described above, however, if the product temperature is higher than 140°C in the cooking with heat, scorching occurs due to overheating and the quality of the obtained onion extract is remarkably deteriorated, and thus the heating temperature is limited to up to 140°C. However, if the heating temperature is over 140°C when the onion extract is produced, although the quality of the onion extract is deteriorated as described above, quite unexpected and surprising findings have been obtained in which the salty taste is remarkably enhanced, and even if the amount of the salt used is reduced, the flavor having both of the impact of the first taste and the retention of the aftertaste can be provided by adding the onion extract overheated to a seasoning or food and drink together with the salt. It has been found, therefore, that a finely ground plant tissue product in the onion extract and a flavor component, obtained when the overheating treatment is performed at a product temperature of higher than 140°C in cooking with heat in the preparation of the onion extract described above, have an outstanding salty taste enhancing effect. The present inventors have accomplished the present invention based on the findings described above.

The present inventors have also found that in the finely ground plant tissue product described above, a sterol, a sterol fatty acid ester, and the like (hereinafter which may be correctively referred to as "sterols"), which exist in a state in which they are exposed from or flow out of cell walls of plant cells destroyed to the outside, have an adsorption and release function of the flavor component. Furthermore, the present inventors have found that the flavor component, which exhibits the salty taste enhancing effect, is sulfur-containing compounds (sulfides, thiophenes, and the like) derived from liliaceae plants such as onion, and Maillard reaction products (furans, aldehydes, pyrazines, and the like), which are generated in cooking with heat; and have further found that the sulfur-containing compounds and the Maillard reaction products are adsorbed and retained in the sterols, which are exposed from or flow out of the cell walls of the plant tissues destroyed to the outside, and are released when they are eaten, thereby exhibiting the salty taste enhancing effect. The present invention has been accomplished based on the numerous findings.

A first present invention relates to a salty taste enhancer including a finely ground plant tissue product of a liliaceae vegetable of onion and/or garlic in which at least a part of cell walls are destroyed and which passes through a size of 140-mesh (140-mesh; USA), and a flavor component including a Maillard reaction product including furans selected from furfural, 2-acetylfuran, 5-methylfurfural, or furfuryl alcohol, and the total peak area of the furans is 2.0-fold or more of a peak area of decane when 1 ppm of the decane is added to the salty taste enhancer in a gas chromatograph and a sulfur-containing compound wherein the sulfur-containing compound is dimethyl trisulfide, dimethyl disulfide, or allylmethyl disulfide, and the total peak area of the sulfur-containing compounds is 2.76-fold or more of a peak area of decane when 1 ppm of the decane is added to the salty taste enhancer in a gas chromatograph. In a preferable embodiment, the salty taste enhancer includes the finely ground plant tissue product in a content of 0.9 to 10.0% by weight in terms of dry matter.

In a preferable embodiment, the finely ground plant tissue product includes sterols which exist in a state in which they are exposed from or flow out of the cell walls destroyed to the outside.

In a preferable embodiment, the sterols include a sterol or a sterol fatty acid ester shown by the following general formula (1): 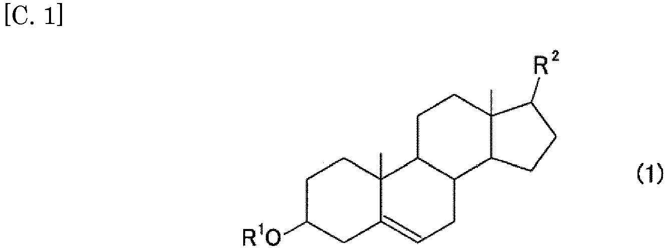 wherein R¹ represents a hydrogen atom or a fatty acid residue, and R² represents a hydrocarbon group including no double bond.

In a preferable embodiment, the sterol or sterol fatty acid ester is a β-sitosterol or a β-sitosterol fatty acid ester.

In a preferable embodiment, the liliaceae vegetable is onion.

In a preferable embodiment, the finely ground plant tissue product of the liliaceae vegetable is obtained by mashing a liliaceae vegetable, squeezing a liliaceae vegetable to extract juice, subjecting a raw liliaceae vegetable to an enzyme treatment, or adding water to a dried liliaceae vegetable and then subjecting it to an enzyme treatment.

In a preferable embodiment, the flavor component has flavor enhanced by cooking with heat.

In a preferable embodiment, the salty taste enhancer includes at least one product of furans, aldehydes, and pyrazines as the Maillard reaction product.

In a preferable embodiment, a peak area of acetic acid is 0.28-fold or less of a peak area of decane when 1 ppm of the decane is added to the salty taste enhancer in a gas chromatograph.

In a preferable embodiment, the salty taste enhancer includes, as the sulfur-containing compound, at least one product of thiophenes and sulfides.

In a preferable embodiment, the salty taste enhancer of the present invention is in the state of a paste containing moisture.

In another preferable embodiment, the salty taste enhancer of the present invention includes an excipient, which is in the state of a powder.

A second present invention relates to a method for producing a salty taste enhancer, including heating liquid of a mashed liliaceae vegetable of onion and/or garlic, juice of a liliaceae vegetable of onion and/or garlic, enzyme-treated liquid of a liliaceae vegetable, or a concentrate thereof to obtain the salty taste enhancer of the present invention.

In a preferable embodiment, the liquid of a mashed liliaceae vegetable, the juice of a liliaceae vegetable, the enzyme-treated liquid of a liliacease vegtetable, or the concentrate thereof is introduced into a heating vessel in a heating device; is forcibly brought into contact with a heating surface provided in the vessel; and is cooked with heating while it is moved along the heating surface in a state in which it is almost uniformly expanded to a thin film state.

In a preferable embodiment, a heating temperature is 160°C or higher.

In a preferable embodiment, onion is used as the liliaceae vegetable.

The present disclosure also relates to a seasoning including the salty taste enhancer of the present invention and a salt.

The present disclosure also relates to food and drink including the salty taste enhancer of the present invention and a salt.

A third embodiment of the present invention relates to a method for enhancing a salty taste of food and drink including adding the salty taste enhancer of the present invention to food and drink.

### Advantageous Effects of Invention

As for the reduction of a salt in food and drink, there are, from before, additives and seasonings for reducing the salt such as various yeast extracts and flavors, in addition to the various proposals described in the prior art documents specifically described above. The salty taste enhancing effects obtained by these proposals, however, are low, i.e., a ratio of the salt, which can be substituted, is up to about 10% based on 100% by weight of the salt. On the contrary, according to the salty taste enhancer of the present invention, the ratio is more than 20%. The excellent salty taste enhancing effect can also be exhibited. In addition, the salty taste enhancer of the present invention, in which the taste component (the Maillard reaction product) has been enhanced by heating, can exhibit the more excellent salty taste enhancing effect. When the salty taste enhancer of the present invention is added to food and drink, accordingly, the impact of a first taste and the retention of an aftertaste can be enhanced even if the amount of the salt used is reduced. Also, according to the present invention, the amount of the salt used can be reduced without impairing the flavor of the food and drink, and risks such as lifestyle diseases caused by a high salt intake can be reduced. Further, the salty taste enhancer of the present invention can be obtained by simple production steps without necessity of complicated production steps.

### Brief Description of the Drawings

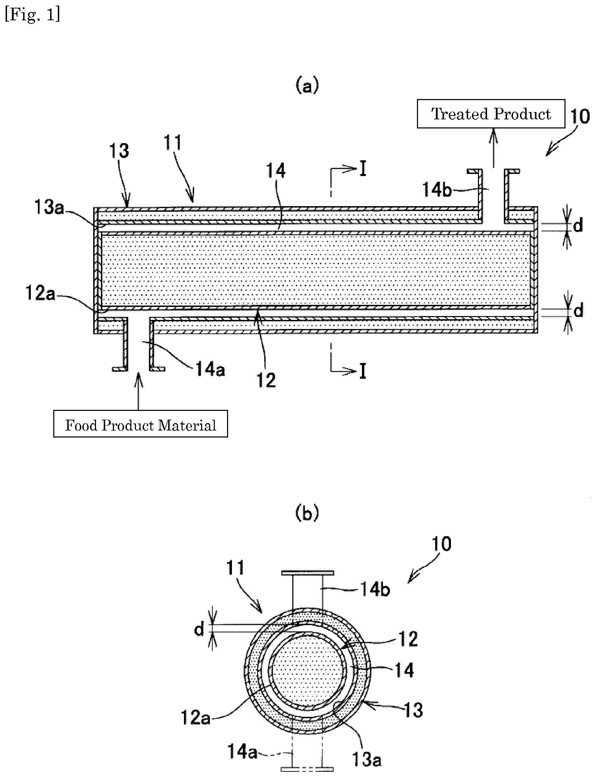

Fig. 1 shows an outline of one embodiment of a heating device used in the present invention, wherein (a) is a sectional side view, and (b) is a cross-sectional view at line I-I in Fig. 1 (a).

### Description of Embodiments

The present invention will be explained in further detail below.

The salty taste enhancer of the present invention includes a finely ground plant tissue product of a liliaceae vegetable in which at least a part of cell walls are destroyed and which passes through a size of 140-mesh (140-mesh; USA) (which hereinafter may also be simply referred to as a "finely ground plant tissue product"), and a flavor component including a Maillard reaction product including furans selected from furfural, 2-acetylfuran, 5-methylfurfural, or furfuryl alcohol, and the total peak area of the furans is 2.0-fold or more of a peak area of decane when 1 ppm of the decane is added to the salty taste enhancer in a gas chromatograph and a sulfur-containing compound wherein the sulfur-containing compound is dimethyl trisulfide, dimethyl disulfide, or allylmethyl disulfide, and the total peak area of the sulfur-containing compounds is 2.76-fold or more of a peak area of decane when 1 ppm of the decane is added to the salty taste enhancer in a gas chromatograph, wherein the finely ground plant tissue product is preferably included in a content of 0.9 to 10.0% by weight in terms of dry matter.

The finely ground product from the plant tissues of the liliaceae vegetable is obtained by subjecting the liliaceae vegetable to a predetermined treatment, and destroying and decomposing the plant tissues thereof. The finely ground plant tissue product may be in a solid state, a state in which it is dispersed in liquid, or a state in which it is dissolved in an aqueous solution.

The finely ground plant tissue product in the present invention refers to a concept including a phenomenon in which cell walls and cell membranes of plant tissues of a liliaceae vegetable are destroyed and the plant cells are decomposed. The finely ground plant tissue product of the liliaceae vegetable, accordingly, includes various components in the plant cells, which are in a state in which they are separated from other plant cells, obtained by subjecting the liliaceae vegetable to a predetermined treatment to destroy and decompose at least a part of the plant cells. Any method for grinding the plant tissue may be used so long as it can destroy the cells, whereby the sterols, included in the plant cells, can be exposed from or can flow out of the cell walls to the outside, such as physical (mechanical) methods, chemical methods, and method using an enzyme.

In the present invention, a specific method for obtaining the finely ground product from the plant tissues of the liliaceae vegetable may include, for example, mashing the liliaceae vegetable, squeezing the liliaceae vegetable to extract juice, subjecting the raw liliaceae vegetable to an enzyme treatment, adding water to the dried liliaceae vegetable and then subjecting it to an enzyme treatment, and the like. Further, the finely ground plant tissue product of the present invention is in the state in which at least the cell walls and cell membranes of the plant tissues are destroyed, and the sterols, included in the cells, are exposed from or flow out of the cell walls to the outside. A method for obtaining such a finely ground plant tissue product may be appropriately selected depending on the kind and the throughput amount of the liliaceae vegetable, and it is preferable to perform arbitrarily enzymolysis, because the amount of the finely ground product passing through a size of 140-mesh is increased and a yield rate is improved. In the enzyme treatment, enzymes capable of destroying the plant tissues may be used, and includes, but are not particularly limited to, for example, cellulase, pectinase, hemicellulase, protease, glucoamylase, and the like. These enzymes may be used alone or as a mixture of two or more kinds. In addition, there is no particular limitation in how many enzyme treatments are performed.

In the present invention, as described above, the finely ground product passing through a size of 140-mesh (140-mesh; USA) is used among the ground plant tissue product. In the present invention "140-mesh; USA" refers to a mesh size of USA (American) standards, and whether or not the ground plant tissue can pass through the mesh size is an indication showing a size of the ground plant tissue.

A roughly ground product, which cannot pass through the size of 140-mesh (140-mesh; USA), does not have the remarkable adsorption and release effect of the salty taste enhancing component such as the Maillard reaction product or the sulfur-containing compounds, which is aimed by the present invention as described above, even if the product is the ground plant tissue product of the liliaceae vegetable, and thus it is preferable to remove such a roughly ground product. This reason has not necessarily been cleared, but it can be considered that it may occur because such a roughly ground product includes a large amount of coarse particles of the plant tissue, such as cellulose and pectin, but a small amount of the sterols, which are exposed from or flow out of the cell walls of the destroyed plant cells to the outside and contribute to the adsorption and the release effect of the Maillard reaction product and the sulfur-containing compounds.

In the present invention, in order to remove the roughly ground product as described above, a known method such as a sieve or filter press may be used. When pressure filtration such as filter press is performed, however, an aperture becomes smaller due to clogging, and a yield of the finely ground product having a size of 140-mesh or less may be sometimes remarkably decreased. It is preferable, accordingly, to filter the product with a 140-mesh sieve. In order to prevent the decrease of the yield of the finely ground product, it is preferable to thoroughly destroy the plant tissue.

As a method for obtaining the finely ground plant tissue product as described above, when the enzyme treatment is performed, the resulting product includes sufficiently the finely ground product passing through a size of 140-mesh, and thus it may sometimes be used as it is without passing it through the sieve. In this case, it is enough that a ratio of the component passing through a size of 140-mesh is previously measured by sampling and it is confirmed that a sufficient amount is included.

A kind, a producing district, and a harvest time of the liliaceae vegetable used in the present invention are not particularly limited. A method for storing the liliaceae vegetable and a storage time thereof are not also particularly limited. The liliaceae vegetable may include onion, garlic, green onion, chinese chive, allium wakegi, chive, shallot, allium schoenoprasum, and the like. Of these liliaceae vegetables, the onion and garlic are used, and the onion is more preferable. The reason is not necessarily clear, but it has been considered that the finely ground plant tissue product obtained from the onion or garlic may have a high adsorbing ability of the Maillard reaction product and the sulfur-containing compounds included in the salty taste enhancer, it is hard to scatter the Maillard reaction product and the sulfur-containing compounds until they are eaten and released in the mouth, and it is easy to release the Maillard reaction product and the sulfur-containing compounds in the mouth.

The sterol or the sterol fatty acid ester shown by the general formula (1) may specifically include, for example, campesterol, campesterol fatty acid esters, β-sitosterol, β-sitosterol fatty acid esters, cholesterol, and cholesterol fatty acid esters. Of these, the β-sitosterol and β-sitosterol fatty acid esters are preferable in terms of the adsorbing ability and the release ability of the Maillard reaction product and the sulfur-containing compounds included in the salty taste enhancer.

The fatty acid in the sterol fatty acid ester may include C18 unsaturated fatty acids such as oleic acid, linoleic acid, and linolenic acid.

### «Determination of Flavor Component-Adsorbing Ability in Sterols in Finely Ground Plant Tissue Product»

### 1. Preparation of Finely Ground Plant Tissue Product

### (1) Juice Extraction

Onion puree 14,000 g (100% by weight), was squeezed to extract juice using a juice extractor (Juice Extractor GOLD GP-E1503, manufactured by GREEN POWER Co. Ltd.) to obtain 12,385 g (88.5% by weight) of the juice and 1,150 g (8.2% by weight) of a residue.

### (2) Centrifugation

The juice obtained above was separated into a supernatant and a precipitate by a centrifugation (Himac CF7D, Hitachi Koki Co., Ltd., Conditions: 6574 G, 10 minutes, 15°C) to obtain 11,934 g (85.24% by weight) of the supernatant and 451 g (3.22% by weight) of the precipitate.

### (3) Sieving

Using a 140-mesh (140-mesh; USA) sieve, the precipitate obtained above was separated into a product which passed through the sieve (a finely ground plant tissue product) and a product which did not pass through the sieve (a roughly ground plant tissue product) to obtain 366 g (2.6% by weight) of the finely ground plant tissue product and 85 g (0.61% by weight) of the roughly ground plant tissue product.

### 2. Component Analysis of Finely Ground Plant Tissue Product

Five components in the finely ground plant tissue product obtained above were analyzed. The results are shown in the following Table 1.

### [Table 1]

**Table 1: Analysis results of five components in finely ground plant tissue product**

| Analysis items | Content | Analysis method |
|---|---|---|
| Moisture | 75.9% by weight | Drying method by heating under reduced pressure |
| Protein | 3.4% by weight | Kieldahl method (Note: 1) |
| Lipid | 5.0% by weight | Acid decomposition method |
| Ash | 0.6% by weight | Direct ashing method |
| Carbohydrate | 15.1% by weight | (Note: 2) |

| | | |
|---|---|---|
| (Note: 1) Nitrogen-protein conversion factor: 6.25 (Note: 2) Calculation Formula: 100% by weight - (Moisture + Protein + Lipid + Ash)% by weight | | |

### 3. Flavor Component-Adsorbing Ability of Lipid Fraction or Fraction Other Than It

### (1) Extraction of Lipid Fraction from Finely Ground Plant Tissue Product Using Benzene

To 100 g of a finely ground plant tissue product was added 100 g (113.6 ml) of benzene, which was mixed, and the mixture was subjected to ultrasonication for 30 minutes. After the mixture was allowed to stand for one day, the extraction was performed, and the resulting extract was separated into a supernatant (a fraction extracted with benzene) and a precipitate through centrifugation. The benzene was removed by volatilization from the benzene fraction extracted to obtain yellow oil-like liquid (1.7 g). On the other hand, 100 g (113.6 ml) of benzene was further added to the precipitate, and the extraction, the centrifugation, and the removal of benzene by volatilization were performed in the same manner as above, thereby obtaining yellow oil-like liquid (1 g). After the extraction with benzene, 100 g (113.6 ml) of benzene was added to the precipitate, and the extraction, the centrifugation, and the removal of benzene by volatilization were performed in the same manner as above, thereby obtaining yellow oil-like liquid (0.56 g).

A procedure containing the extraction, the centrifugation, and the removal of benzene by volatilization was repeated 6 times, whereby almost 100% of the lipid fractions, included in 100 g of the finely ground plant tissue product, were recovered. The total amount of the lipid fraction recovered was 5 g (5% by weight to the whole finely ground plant tissue product).

### (2) Flavor Component-Adsorbing Ability Test of Lipid Fraction (Fraction Extracted with Benzene) or Fraction Other Than It

Which fraction of the lipid fraction and the fraction other than it (the fraction insoluble in benzene) in the finely ground plant tissue product, which were fractionated as above, had an adsorption effect of a flavor component was investigated.

### (a) Test Method

To each of 0.3 g (dry weight: 0.05 g) of the finely ground plant tissue product, the fraction insoluble in benzene (0.05 g), and the fraction extracted with benzene (0.01 g) was added 10.2 µl of methyl propyl disulfide, and the mixture was heated at 90°C for 1.5 hours. After that, remaining smell was checked. For comparison, the same test as above was performed except that methyl propyl disulfide was not added. The finely ground plant tissue product was washed with ethanol twice followed by water three times, thereby removing the sulfide smell derived from a starting material, and the resulting product was used in the test.

### (b) Test Results

The results of the flavor component-adsorbing ability test described above are shown in Table 2 below.

### [Table 2]

**Table 2 Results of flavor component-adsorbing ability test**

| | Finely ground plant cell tissue product | Fraction insoluble in benzene | Fraction extracted with benzene |
|---|---|---|---|
| Presence of sulfide | Δ | Δ | ⊚ |
| No sulfide | × | × | × |

| | | | |
|---|---|---|---|
| (Note) Evaluation criteria ⊚: Considerably strong smell ○: Strong smell Δ: Slight smell ×: No smell | | | |

### (c) Discussion

The results as above show that a component having the strong adsorption effect is included in the lipid fraction (the fraction extracted with benzene) in the finely ground plant tissue product.

### 4. Composition of Lipid Fraction (Fraction Extracted with Benzene) in finely ground plant tissue product

The fraction extracted with benzene is liquid at an ordinary temperature, and slightly cloudy, and thus it can be presumed that the fraction has a main component of natural fats and includes a slight amount of wax. It is also known that a lipid fraction in a plant generally includes a slight amount of phospholipid and sterols.

### 5. Flavor Component-Adsorbing Ability of Each Component in Lipid Fraction Generally Included in Plant

The flavor component-adsorbing ability of each component in the lipid fraction, which is generally included in a plant, was examined in a method described below using reagents.

### (1) Reagent

Reagents shown in Table 3 below were used.

### [Table 3]

**Table 3 Reagent Used**

| | |
|---|---|
| Wax | Soybean wax Note 1) |
| Phospholipid | Soybean lecithin |
| Oil | Rapeseed oil |
| Sterols | Cholesterol, β-sitosterol |

| | |
|---|---|
| Note 1) The results of DSC measurements of the finely ground plant cell tissue product showed a peak of thermal emission at a comparatively low temperature (40 to 50°C), and thus the soybean wax having a melting point of 50°C was used. | |

### (2) Test Method

Reagents (500 mg of WAX, 15 mg of phospholipid, 500 mg of oil, and 10 mg of each sterol) were weighed, and all of the components were heated in a water-bath having a temperature of 50°C for 5 minutes to solve the WAX and phospholipid, and they were mixed using a spatula. After heating, the mixture was taken out from the bath to a place with room temperature, to which 0.01 g (10.2 µl) of methyl propyl disulfide was added, and the mixture was stirred and was allowed to stand at room temperature for 5 minutes. After that, 100 ml of water was added, and the mixture was heated at 90°C for 3.5 hours. At that time, the degree of the smell of the flavor component is examined as the adsorbing ability by a sensory evaluation.

### (3) Test Results

The results of the adsorption test are shown in Table 4 below.

### [Table 4]

**Table 4 Results of flavor component-adsorbing ability test**

| Component | Adsorption effect |
|---|---|
| WAX (500 mg) | × |
| Rapeseed oil (500 mg) | × |
| Phospholipid (15 mg) | × |
| Cholesterol (10 mg) | ○ |
| β-Sitosterol (10 mg) | ○ |

| | |
|---|---|
| (Note) Evaluation criteria ○: Strong smell Δ: Slight smell ×: No smell | |

### (4) Discussion

From the results above, the substance which adsorbs strongly the flavor component is the cholesterols of cholesterol and β-sitosterol.

### 6. Relationship between Sterol Skeleton and Flavor Component-Adsorbing Ability, Comparison in Flavor Component-Adsorbing Ability between Finely Ground Plant Tissue Product and Sterols

In order to investigate the influence exerted by the difference of the sterol skeleton on the flavor component-adsorbing ability, a smell adsorbing ability of a sterol including no double bond in the side chain R² in the general formula (1) such as cholesterol or β-sitosterol used in the experiments above and that of a sterol including a double bond at the side chain R² (stigmasterol or ergosterol) were determined.

In addition, the flavor component-adsorbing ability in the case of the sterol alone was compared with that of the finely ground plant tissue product including the sterol as in present invention.

### (1) Flavor Component-Adsorbing Ability Test

### (a) Materials Used

### (i) Adsorbing Materials

Finely Ground Plant Tissue Product: The finely ground plant tissue product obtained in "1. Preparation of Finely Ground Plant Tissue Product" as above was washed with ether twice followed by water twice, and the resulting product was used.
β-Sitosterol: Reagent
Stigmasterol: Reagent
Cholesterol: Reagent
Ergosterol: Reagent

### (ii) Flavor Component

Methyl Propyl Disulfide: Reagent

### (b) Sample

(i) Adsorbing Material Alone or Flavor Component Alone (Standard)
(ii) Flavor Component Added with Adsorbing Material

### (c) Test Method

0.05 g of each adsorbing material was weighed, to which 20 µl of methyl propyl disulfide was added as the flavor component, and the mixture was stirred and was allowed to stand for 10 minutes. Then, 10 ml of water was added thereto, and the mixture was subjected to open-heating at room temperature for 4.5 hours or 90°C for 4.5 hours. After that, the resulting product was diluted with water in measuring cylinder to 10 ml total again, which was enclosed in a vial, and it was analyzed through Headspace (HS) GC.

For each sample, the preparation was performed three times, HSGC was performed for each, and an average value thereof was obtained.

Similarly, the adsorbing material alone or the flavor component alone, as a standard, was allowed to stand at room temperature for 4.5 hours, and HSGC was performed in the same manner as above.

### <HSGC Measurement Conditions>

The analysis by HSGC was performed using an apparatus in analysis conditions described below.

### Gas Chromatograph Device: GC-2014 manufactured by Shimadzu Corporation

Analysis Method: Programmed Temperature Analysis
Column: TC-WAX
Column Size: 30 m × 0.25 mm
Carrier Gas: Helium
Detector: FID
Headspace: TurboMatrix 40 manufactured by Perkin Elmer Co., Ltd.
Gas Chromatograph Conditions
Initial Temperature: 40°C
Initial Temperature Retention Time: 2 minutes
Temperature-Increasing Rate: 5°C per minute up to 100°C, and then 10°C per minute up to 240°C
Final Temperature: 240°C
Final Temperature Retention Time: 5 minutes
Carrier Gas: Helium 157.5 kPa
Flow Rate of Carrier Gas: 2.49 ml/minute

### Headspace Conditions

Heating Temperature: 40°C
Heating Time: 20 minutes
Pressurizing Time: 5 minutes
Pulling out Time: 0.5 minutes
Injection: 0.15 minutes
Needle Temperature: 95°C
Transfer: 95°C

### (c) Test Results

The results of HSGC described above are shown in Table 5 below.

### [Table 5]

**Table 5 Result of flavor component-adsorbing ability test (HSGC)**

| Test condition | Sample | First time | Second Time | Third Time | Average |
|---|---|---|---|---|---|
| at room temperature for 4.5 hours, leaving | Finely ground plant tissue product (0.05 g) | 0 | 0 | 0 | 0 |
| | β-Sitosterol (0.05 g) | 0 | 0 | 0 | 0 |
| | Cholesterol (0.05 g) | 0 | 0 | 0 | 0 |
| | Ergosterol (0.05 g) | 0 | 0 | 0 | 0 |
| | Stigmasterol (0.05 g) | 0 | 0 | 0 | 0 |
| | Methyl propyl disulfide (20 µl) | 1,088,280 | 1,028,228 | 1,348,620 | 1,155,043 |
| at 90°C for 4.5 hours, heating | Finely ground plant tissue product (0.05 g) | 0 | 0 | 0 | 0 |
| | β-Sitosterol (0.05 g) | 0 | 0 | 0 | 0 |
| | Cholesterol (0.05 g) | 0 | 0 | 0 | 0 |
| | Ergosterol (0.05 g) | 0 | 0 | 0 | 0 |
| | Stigmasterol (0.05 g) | 0 | 0 | 0 | 0 |
| | Methyl propyl disulfide (20 µl) | 0 | 0 | 0 | 0 |
| | Finely ground plant tissue product (0.05 g) + Methyl propyl disulfide (20 µl) | 397,383 | 329,648 | 485,673 | 404,235 |
| | β-Sitosterol (0.05 g) + Methyl propyl disulfide (20 µl) | 112,661 | 199,669 | 152,688 | 155,006 |
| | Cholesterol (0.05 g) + Methyl propyl disulfide (20 µl) | 331,309 | 548,464 | 554,942 | 478,238 |
| | Ergosterol (0.05 g) + Methyl propyl disulfide (20 µl) | 19,269 | 35,011 | 28,672 | 27,651 |
| | Stigmasterol (0.05 g) + Methyl propyl disulfide (20 µl) | 0 | 0 | 0 | 0 |

### (2) Discussion

In a case where the sample of each adsorbing material alone or the flavor component alone was allowed to stand at room temperature for 4.5 hours, HSGC detected only methyl propyl disulfide, and did not detect methyl dipropyl disulfide from the samples other than methyl propyl disulfide. It can be understood, accordingly, that any adsorbing material prior to addition of methyl propyl disulfide does not include methyl propyl disulfide, which is the flavor component, and the methyl propyl disulfide, the flavor component, does not completely volatilize even if it is allowed to stand at room temperature for 4.5 hours.

As for the sample of methyl propyl disulfide alone, however, HSGC did not detect a peak after it was heated at 90°C for 4.5 hours. It means that if there is methyl propyl disulfide alone, it volatilizes after it is heated at 90°C for 4.5 hours.

On the contrary, the peak of methyl propyl disulfide was detected from the sample in which methyl propyl disulfide was added to the finely ground plant tissue product, the sample in which methyl propyl disulfide was added to cholesterol, or the sample methyl propyl disulfide was added to β-sitosterol, even after it was heated at 90°C for 4.5 hours. From the sample in which methyl propyl disulfide was added to stigmasterol or the sample in which methyl propyl disulfide was added to ergosterol, however, the peak of methyl propyl disulfide was hardly detected after it was heated at 90°C for 4.5 hours.

From the foregoing, it was found that β-sitosterol and cholesterol, having no double bond at the side chain, have a strong flavor component-adsorbing ability and inhibit the volatilization of the flavor component caused by heating; whereas, stigmasterol and ergosterol, having a double bond at the side chain, have scarcely the adsorbing ability and have a low effect to inhibit the volatilization of the flavor component caused by heating. It can be considered from these findings that the constitution of the side chain in the sterol skeleton influences on the flavor component-adsorbing ability of the sterol.

As shown in Table 5, the finely ground plant tissue product shows the higher flavor component-adsorbing ability than that in the case of β-sitosterol alone even if they are used in the same amount.

The salty taste enhancer of the present invention uses the liliaceae vegetable as the starting material, but it is possible to add a material other than the liliaceae vegetable. Examples thereof may include vegetables other than the liliaceae vegetable, fruits, animal meat and its extracts, grain flour, milk products, various seasonings, cooking spices, and food product materials such as oils and fats. These materials may be mixed as they are when they are liquid, or may be used by dissolving or dispersing in liquid of a mashed liliaceae vegetable such as onion, juice of a liliaceae vegetable, enzyme-treated liquid of a liliaceae vegetable, or a concentrate thereof (hereinafter which may be referred to as "juice or the like") when they are powder. When the material is solid, it is necessary to grind it to a grain size of about 3 mm or less, and then to mix it. These materials may also be added to the juice or the like of the liliaceae vegetable, which has not yet been concentrated, or may be added to the juice or the like of the liliaceae vegetable, which has been concentrated. It is also possible to add it to the salty taste enhancer obtained by heating.

The salty taste enhancer of the present invention includes the finely ground plant tissue product preferably in a content of 0.9 to 10.0% by weight, in terms of dry matter and more preferably 0.9 to 5.0% by weight. When the content of the finely ground plant tissue product is less than 0.9% by weight, the salty taste enhancer has a weaker retention effect of the aftertaste, and thus the salty taste enhancing effect tends to be decreased. When it is more than 10.0% by weight, local overheating occurs in the heating treatment because of a large amount of the finely ground plant tissue product, burnt parts with a nasty taste and smell are generated, the balance of flavor is disrupted, and thus the salty taste enhancing effect tends to be decreased.

In the present invention, the liquid of a mashed liliaceae vegetable, the juice of a liliaceae vegetable, the enzyme-treated liquid of a liliaceae vegetable, or a concentrate thereof is filtered through a 140-mesh sieve, and the liquid which has been passed through the sieve is centrifuged in a condition of 6574 G for 15 minutes to obtain a precipitate. A content of moisture contained in the resulting precipitate is measured, and a weight of components contained in the precipitate other than moisture is defined as a weight of dry matter of the finely ground plant tissue product. In the present invention, accordingly, this dry matter weight is defined as the finely ground plant tissue product weight in terms of dry matter. The concentrate which passes through a 140-mesh sieve is centrifuged in a condition of a moisture content of 60% or more and 6574 G for 15 minutes, because when the moisture content is low, it is difficult to precipitate the finely ground plant tissue product due to the viscosity of the concentrate.

The moisture content may be measured in a moisture content-measuring device generally used, and it can be measured, for example, by using "SMART SYSTEM 5" manufactured by CEM Corporation.

As a method for separating and analyzing the sterol or the sterol fatty acid ester in the finely ground plant tissue product, after the acid decomposition, the hydrolysis, and the extraction, the product is purified through column chromatography, and the analysis can be performed through a gas chromatography (GC method). The fatty acid can be analyzed through a gas chromatography (GC method) after the hydrolysis and the methyl esterification. Measurement examples are shown below.

### <Method for Isolating Finely Ground Plant Tissue Product>

Onion is ground using a food product grinder ("Comitrol (registered trademark) Processor" manufactured by Urschel Laboratories Incorporated) into a size of 0.19 mm, thereby obtaining onion puree. This onion puree is centrifuged (1870 G, 20 minutes). A precipitate is recovered, and it is filtered through a metal mesh (an aperture of 106 µm, 140-mesh). A fraction which has passed through the mesh is centrifuged through a centrifugal machine (6574 G, 15 minutes). This precipitate is recovered, and concentrated at 40°C through a vacuum dryer until a moisture content reaches about 75% to obtain a finely ground plant tissue product of onion.

### <Method for Analyzing Total Sterol>

Ethanol is added to the finely ground plant tissue product of onion, and the mixture is stirred. Hydrochloric acid (5 mol/1) is added thereto, and the mixture is subjected to an acid decomposition at 80°C for 30 minutes. Hydrolysis thereof is performed by adding an ethanol solution of potassium hydroxide (1 mol/1) thereto, and then unhydrolyzed product is extracted by addition of water and diethyl ether. After an ether layer is separated, the layer is washed with water, dehydrated, and filtered. After that, the resulting product is subjected to a purification treatment through column chromatography. The ether layer, which has been washed with water, dehydrated, and filtered, is passed through a silica cartridge column, and the column is washed with mixed liquid of diethyl ether and hexane (15:85), which is eluted with mixed liquid of diethyl ether and hexane (35:65). After an internal standard (5α-cholestane) is added to the resulting eluate, the solvent is distilled away, which is dissolved in hexane, and then a sterol amount is measured through gas chromatography (a hydrogen flame ionization detector). The total amount of 9 sterols is defined as the total sterol amount. The nine sterols are cholesterol, brassicasterol, campesterol, stigmasterol, 7-ergostenol, β-sitosterol, isofucosterol, 7-stigmastenol, and avenasterol.

### <Method for Analyzing Free Sterol>

A chloroform-methanol (2:1) solution is added to the finely ground plant tissue product of onion, and the mixture is reflexed to extract lipid. After the solvent is distilled away from the liquid extract, the resulting product is dissolved in hexane, and the solution is subjected to a purification treatment using a column chromatograph. The hexane solution is passed through a silica cartridge column, and the column is washed with a mixed liquid of diethyl ether and hexane (15:85), and then it is eluted with mixed liquid of diethyl ether and hexane (35:65). After an internal standard (5α-cholestane) is added thereto, the solvent is distilled away. The obtained product is dissolved in hexane, and then an amount of sterol is measured through gas chromatography (a hydrogen flame ionization detector). The total amount of 9 free sterols is defined as a total free sterol amount. The 9 sterols are cholesterol, brassicasterol, campesterol, stigmasterol, 7-ergostenol, β-sitosterol, isofucosterol, 7-stigmastenol, and avenasterol.

### <Method for Analyzing Fatty Acid Composition>

To the finely ground plant tissue product of onion is added a methanol solution of sodium hydroxide (0.5 mol/l), thereby performing hydrolysis, and then a methanol solution of methanol complex of boron trifluoride, thereby performing methyl esterification. Hexane and a saturated saline solution are added thereto to isolate a hexane layer. The detection and measurement of the hexane layer is performed through gas chromatography (a hydrogen flame ionization detector).

### <Maillard Reaction Product>

The Maillard reaction product in the salty taste enhancer of the present invention is a causative substance of browning occurring when vegetables are cooked with heat, but in the present invention, it is an important component which exhibits the salty taste enhancing effect. The Maillard reaction product may include, for example, aroma components such as furans, aldehydes, and pyrazines.

The furans may include, for example, furfural, 2-acetylfuran, 5-methylfurfural, furfuryl alcohol, and the like. The aldehydes may include, for example, pentanal, hexanal, 2-methyl-2-butenal, 2-methyl-2-pentenal, nonanal, methylthio acetaldehyde, and the like. The pyrazines may include, for example, pyrazine, methylpyrazine, 2,3-dimethylpyrazine, 2,5-dimethylpyrazine, 2,6-dimethylpyrazine, ethylpyrazine, and the like.

### <Sulfur-Containing Compounds>

In the present invention, the sulfur-containing compounds are important components which exhibit the salty taste enhancing effect together with the Maillard reaction product in the salty taste enhancer.

The sulfur-containing compounds may include, for example, sulfides such as dimethyl trisulfide, dimethyl disulfide, allyl methyl disulfide, methyl propyl disulfide, propenyl propyl disulfide, dipropyl disulfide, allylisopropyl sulfide, methyl isopropyl disulfide, and diallyl sulfide; thiophenes such as 2-acetylmethylthiophene, 2-methylthiophene, 3-methylthiophene, 2,4-dimethylthiophene, 2,5-dimethylthiophene, 3,4-dimethylthiophene, 2-ethylthiophene, 2-(t-butyl)-3-methylthiophene, and 2,5-diethylthiophene; 3,4-dimethyl-2,5-dihydrothiophene-2-one, dihydro-3(2H)- thiophenone, 2-[(methyldithio)methyl]furan, dimethyl sulfoxide, 3,5-diethyl-1,2,4-trithiolane, and the like.

### <Content of Furans>

As for the amount of the furans in the salty taste enhancer of the present invention, it is preferable that the total of peak areas of furfural, 2-acetylfuran, 5-methylfurfural, and furfuryl alcohol in the gas chromatograph is twice or more a peak area of decane when 1 ppm of decane is added to the salty taste enhancer. All of the furfuryl alcohol, 5-methylfurfural, 2-acetylfuran, and furfural are substances generated by causing the Maillard reaction of sugar and an amino acid under heating conditions, and it can be presumed that these components contribute on the salty taste enhancing effect.

### <Content of Acetic Acid>

When the furans are generated by heating, it can be considered that the larger the amount of the furans, the stronger the salty taste enhancing effect. However, actually, if heating at a high temperature such as a product temperature of 180°C is performed, scorch smell and bitter taste become stronger, and the balance of flavor is disrupted, thus resulting in the decreased salty taste enhancing effect. In such a case, it is known that an amount of acetic acid is correlatively increased, and when heating at a high temperature is performed until a peak area of acetic acid in the gas chromatograph is 0.46-fold of a peak area of decane when 1 ppm of decane is added to the salty taste enhancer, the scorch smell and the bitter taste in the salty taste enhancer are increased and the salty taste enhancing effect is remarkably deteriorated. The amount of acetic acid, accordingly, can be an indicator of the scorch smell or the bitter taste. The peak area of acetic acid is preferably 0.28-fold or less.

### <Content of Sulfur-Containing Compounds>

As for the amount of the sulfur-containing compounds, it is preferable that the total of peak areas of allyl methyl disulfide, dimethyl trisulfide, and dimethyl disulfide, as the main sulfur-containing compounds, is 2.76-fold or more and more preferably 2.91-fold or more, of a peak area of decane when 1 ppm of decane is added to the salty taste enhancer, because the salty taste enhancing effect is increased.

The decane herein is an internal standard substance for quantitatively measuring the flavor component such as the various aroma components described above in the salty taste enhancer of the present invention, which is added to the salty taste enhancer in a concentration of 1 ppm. In the present invention, the amount of the aroma component is quantitated by calculating a ratio of a peak area of a target component to a peak area of decane in gas chromatograph. Specific conditions of gas chromatography analysis are as follows:

### «Method for Measuring Amount of Aroma Component»

### <Indicator Aroma Component>

1) Furans:
   Furfural,
   2-Acetylfuran
   5-Methylfurfural
   Furfuryl Alcohol
2) Acetic Acid
3) Sulfur-Containing Compounds:
   Allylmethyl Disulfide,
   Dimethyl Trisulfide,
   Dimethyl Disulfide

### <GC/MS Measurement Method>

Gas Chromatography Apparatus: 6890N manufactured by Agilent Technologies Inc.
Analysis Method: Programmed Temperature Analysis
Column: HP-INNOWAX
Column Size: 60 m × 0.25 mm
Carrier Gas: Helium
Detector (MS): 5973 inert manufactured by Agilent Technologies Inc.
Gas Chromatograph Conditions:
Initial Temperature: 40°C
Initial Temperature Retention Time: 2 minutes
Temperature-Increasing Rate: 3°C per minute up to 100°C, and then 5°C per minute up to 240°C
Final Temperature: 240°C
Final Temperature Retention Time: 30 minutes
Carrier Gas: Helium 206 kPa
Flow Rate of Carrier Gas: 2.1 ml/minute
MS (detector conditions): Ion Source Temperature 230°C,
   Quadrupole Temperature 150°C

### Injection Conditions:

Injection Device: "TDS" manufactured by GERSTEL GmbH & Co. KG
Cold trap material: Silica Capillary
Sample Tube Material: Tenax TA

### TDS Conditions:

Initial Temperature: 20°C
Initial Temperature Retention Time: one minute
Temperature-Increasing Rate: 60°C per minute
Final Temperature: 240°C
Final Temperature Retention Time: 5 minutes

### CIS Conditions:

Initial Temperature: -100°C
Initial Temperature Retention Time: 0.2 minutes
Temperature-Increasing Rate: 12°C per minute
Final Temperature: 240°C
Final Temperature Retention Time: 10 minutes

### Adsorption Condition of Headspace Gas to Tenax TA Tube

Trap Tube: Tenax TA (manufactured by GERSTEL GmbH & Co. KG)
Sample Temperature: 40°C
Internal Standard: Decane 1 ppm ("040-21602" manufactured by Wako Pure Chemical Industries, Ltd.)
Carrier Gas: Nitrogen
Flow Rate of Carrier Gas: 100 ml/minute
Adsorption Time: 20 minutes
Draining Gas: Nitrogen
Flow Rate of Draining Gas: 150 ml/minute for 5 minutes, and then 100 ml/minute for 10 minutes

### <Measurement Procedure>

To 25 g of a sample (a salty taste enhancer) is added 25 g of distilled water, and the distilled water is further added thereto so that a concentration of decane reaches 1 ppm, which is thoroughly stirred. The resulting product is poured into a flask, and adsorption of headspace gas of onion extract to a trap tube is performed based on the adsorption conditions described above. The trap tube adsorbing the headspace gas is set in an injection apparatus ("TDS" manufactured by GERSTEL GmbH & Co. KG), and a gas chromatography analysis is performed based on the gas chromatography analysis conditions described above.

### <Method for Adjusting Decane Concentration to 1 ppm>

In order to adjust a decane concentration to 1 ppm, a solution, obtained by adding 137 µl of decane to 100 ml of ethanol, is added to a sample in an amount of 25 µl to 25 g of the sample, and the mixture is thoroughly stirred.

### <<Method for Producing Salty Taste Enhancer>>

The salty taste enhancer of the present invention may be produced in a manner in which the finely ground plant tissue product, the Maillard reaction product, and the sulfur-containing compounds, as described above, are separately prepared and then mixed, but in view of the productivity and the like, as shown below, it is preferable to produce it in a manner in which liquid of a mashed liliaceae vegetable, juice of the liliaceae vegetable, enzyme-treated liquid of the liliaceae vegetable, or a concentrate thereof, which does not substantially include solid matter incapable of passing through a size of 140-mesh (140-mesh; USA), is cooked with heat. When the components are separately prepared, it is preferable to use the finely ground plant tissue product from which flavor derived from the plant is removed, which is obtained in a manner in which a plant is squeezed to extract juice and/or is subjected to enzymolysis, the resulting liquid is sieved, and then it is washed with an alcohol or water.

In order not to substantially include the roughly ground plant tissue product incapable of passing through a size of 140-mesh (140-mesh; USA), it is enough that solid matter passing through a size of 140-mesh (140-mesh; USA) is removed from the liquid of a mashed liliaceae vegetable, juice of the liliaceae vegetable, or enzyme-treated liquid of the liliaceae vegetable before the concentration in the case where the concentration is performed, or before the introduction thereof into a heating vessel in a heating device in the case where the concentration is not performed. As an isolation method, filtration using a sieve or a filter press may be performed, as described above.

The liquid of a mashed liliaceae vegetable can be obtained by mashing a raw liliaceae vegetable in a known manner. As for the liquid of the mashed vegetable, the liliaceae vegetable may be heated and then it may be mashed, or the liquid of the mashed vegetable may be strained into a puree, which is in viscous semiliquid form, if necessary. The juice of the liliaceae vegetable can be obtained by cutting or mashing a raw liliaceae vegetable, which is a starting material, and further pulverizing into finer product in an appropriate method, and then pressing or centrifuging it. The enzyme-treated liquid of the liliaceae vegetable can be obtained by allowing the liquid of the mashed vegetable, the juice, the cut or pulverized raw liliaceae vegetable, soaked dry liliaceae vegetable in water to act with an enzyme to dissolve the plant cells. As juice of the liliaceae vegetable, liquid obtained from a soaked dry liliaceae vegetable material in water may be used. When the enzyme-treated liquid is used, the resulting liquid may be used as it is, if the enzyme treatment is sufficiently performed and the resulting liquid contains only a slight amount of solid matter incapable of passing through a size of 140-mesh.

A method for concentrating the liquid of a mashed liliaceae vegetable, the juice of a liliaceae vegetable, the enzyme-treated liquid of a liliaceae vegetable, or the like, is not particularly limited, and it may be heated under an ordinary pressure to boil it down, or it may be concentrated under a reduced pressure. It is enough that the degree of concentration is within a range where the fluidity can be kept even after the concentration, and specifically it is enough that a Brix value, which shows a water-soluble solid concentration, is 90% or less. In order to effectively express the flavor component (the salty taste enhancing component) in the subsequent heating step, it is more preferable to concentrate it to a Brix value of 60 to 85%. When the Brix value is less than 60%, it may be sometimes difficult to express the flavor component; whereas, when it is higher than 85%, burnt parts may sometimes be easily generated.

In order to provide the stronger salty taste enhancing effect, in the cooking with heat, it is considered to be important that the product to be heated, i.e., the liquid of a mashed liliaceae vegetable, the juice of a liliaceae vegetable, the enzyme-treated liquid of a liliaceae vegetable, or the concentrate thereof, which does not substantially include the roughly ground plant tissue product incapable of passing through a size of 140-mesh (140-mesh; USA), is thoroughly heated, and that much scorch smell or bitter taste is not generated. In order to do that, it is preferable that the liquid of a mashed liliaceae vegetable, the juice of a liliaceae vegetable, the enzyme-treated liquid of a liliaceae vegetable, or the concentrate thereof is introduced into a heating vessel in a heating device, it is forcibly brought into contact with a heating surface provided in the vessel, and the heating is performed until the product temperature reaches a predetermined temperature while it is moved along the heating surface in a state in which it is almost uniformly expanded to a thin film state.

As a means for performing a uniform heating treatment, any means may be used so long as the product to be heated can be introduced into the heating vessel in the heating device, it can be forcibly brought into contact with a heating surface provided in the vessel, and the heating can be performed until the product temperature reaches a predetermined temperature while it is moved along the heating surface in a state in which it is almost uniformly expanded to a thin film state. It is preferable that the product temperature reaches the predetermined temperature as fast as possible, because the scorch smell and the bitter taste are decreased and the salty taste enhancing effect becomes stronger.

It is preferable to perform the cooking with heat until the product temperature reaches higher than 140°C and 180°C or lower, more preferably from 150 to 180°C and further more preferably from 155°C to 170°C. When the temperature of cooking with heat is higher than 180°C, scorching occurs due to overheating and the quality of the obtained salty taste enhancer may sometimes be remarkably deteriorated. When it is 140°C or lower, the Maillard reaction slowly advances, and the amount of the furans produced, such as furfuryl alcohol, 5-methylfurfural, 2-acetylfuran, and furfural, becomes small, and thus the desired salty taste enhancer may sometimes not be obtained. Further, depending on the state of the starting material, or the desired quality of the salty taste enhancer, the temperature can also be maintained at the heating temperature described above for a certain period of time. When the cooking with heat is performed at a product temperature of 150°C to 180°C, it is confirmed that the resulting salty taste enhancer has also a strong cooking flavor and an effect of providing a rich taste.

In an example of the heating device described above, for example, a double cylindrical heating device 10, as shown in Fig. 1, may be used. In this double cylindrical heating device 10, a heating vessel 11 is formed from two inner and outer cylinders of an inner cylinder 12 and an outer cylinder 13, each of which has a jacket for heating; a cylindrical space 14, which is a passage for the product to be heated, is formed between two walls of an exterior wall surface 12a of the inner cylinder 12 and an internal wall surface 13a of the outer cylinder 13; and a supply port 14a for the product to be heated and an exhaust port 14b for the product to be heated, which has been subjected to a heating treatment in the heating vessel 11, which communicate with the space 14, are provided. In this double cylindrical heating device 10, the inner cylinder 12 and the outer cylinder 13 may be rotated relatively with each other. In such a case, only one of the inner cylinder 12 and the outer cylinder 13 may be rotated and the other may be fixed, or both of the inner cylinder 12 and the outer cylinder 13 may be rotated in opposite directions.

The heating may be performed in a manner of a double-sided heating type in which heating jackets are provided on both the inner cylinder 12 and the outer cylinder 13, or in a manner of a one-sided heating type in which a heating jacket is provided on only one cylinder. According to this double cylindrical heating device 10, when steam is introduced into either one or both of the two inner and outer cylinders of the inner cylinder 12 and the outer cylinder 13, and the product to be heated is pressed into the heating vessel 11 from the supply port 14a using a pump or the like, the product to be heated flows in the state of a thin film toward the exhaust port 14b inside the space 14 between the inner cylinder 12 and the outer cylinder 13, while heat is applied thereto from the inner cylinder 12 and/or the outer cylinder 13, and it is discharged. At that time, when the two inner and outer cylinders 12 and 13 are rotated relatively with each other, the product to be heated, which has been introduced into the heating vessel 11, flows inside the space 14 between the inner cylinder 12 and the outer cylinder 13, which are rotated relatively with each other, in a direction orthogonal (a rotation axis direction) to a relatively moving direction (rotation direction) of the exterior wall surface 12a of the inner cylinder 12 and the internal wall surface 13a of the outer cylinder 13, and it is discharged from the exhaust port 14b.

In this double cylindrical heating device 10, a width d of the space 14 is adjusted by an outer diameter of the inner cylinder 12 and an inner diameter of the outer cylinder 13, whereby a film thickness of the product to be heated, which flows inside the space 14 in the heating vessel 11, can be adjusted. The degree of heating can be adjusted by an amount of the product to be heated pressed into the heating vessel 11 per hour (a flow rate), in addition to the pressure of steam introduced into the jacket(s) of the inner cylinder 12 and/or the outer cylinder 13, and the film thickness (the width d of the space 14). The product to be heated, which is discharged from the exhaust port(s) 14b of the multiple double cylindrical heating devices 10, which are consecutively connected, or the double cylindrical heating device 10, is circulated by repeatedly pressing the product into the supply port 14a, whereby the heating treatment can be performed repeatedly until the predetermined temperature of the product and the predetermined time are reached and the product is in a desirable processed state.

In general, the product to be heated, which flows along the heating surface in the state of a thin film, preferably has a film thickness within a range of 0.5 to 125 mm. When the film thickness is more than 125 mm, the product to be heated, which flows in the state of a thin film, may not be sometimes uniformly heated to the inside, and it is difficult to advance the Maillard reaction at places far from the heating surface, and thus the amount of furans produced, such as furfuryl alcohol, 5-methylfurfural, 2-acetylfuran, and furfural, is small, and the desired salty taste enhancer cannot be obtained. When it is less than 0.5 mm, the scorching occurs due to overheating, and the quality of the obtained salty taste enhancer may sometimes be remarkably deteriorated. Depending on the structure of the heating device used, the film thickness is more preferably from 1 mm to 30 mm and further preferably from 2 mm to 15 mm, considering the easiness of heat control of the product to be heated.

The salty taste enhancer of the present invention as described above can provide food and drink having the excellent impact of the first taste and the excellent aftertaste retention by adding it to the food and drink together with the salt even if the amount of the salt used is reduced.

The salty taste enhancer of the present invention may be, for example, in the form of a paste containing moisture, or may be proceeded into a powder.

The pasty salty taste enhancer containing moisture can be obtained in a method in which a finely ground product, which contains hardly the roughly ground product incapable of passing through a size of 140-mesh, is obtained as the ground plant tissue product contained in the juice or the like of the liliaceae vegetable, and then the resulting product is mixed with a Maillard reaction product and sulfur-containing compounds, which are separately prepared, without removal of moisture, and the mixture is stirred; a method in which the concentrate of the juice or the like of the liliaceae vegetable is subjected to a heat treatment, and then the resulting product is concentrated until a desirable moisture content is obtained, or the like.

The powdery salty taste enhancer may be obtained in a method in which the finely ground plant tissue product, the Maillard reaction product, and the sulfur-containing compounds are blended; a method in which the paste obtained as above is dried to remove moisture; a method in which an excipient such as dextrin is added to the blended mixture or dried product as above, which is mixed.

Depending on the kind of the target food and drink or the amount of the salt, it is preferable that the pasty or powdery salty taste enhancer is used so that the content of the finely ground plant tissue product is form 0.0009 to 0.3% by weight to the whole food and drink in terms of dry matter. When the salty taste enhancer is added too much, a strange taste may sometimes be generated.

The salty taste enhancer of the present invention may be added directly to the target food and drink, or it may also be added to a seasoning or a spice to obtain a salty taste-enhanced seasoning or a salty taste-enhanced spice, which is added to food and drink. When the salty taste enhancer of the present invention is added to food and drink, the impact of the first taste and the aftertaste retention can be enhanced even if the amount of the salt used is reduced.

The salty taste-enhanced seasoning may include, for example, sauces such as soy sauce, worcestershire sauce, and medium thick sauce, miso (soybean paste), mirin (sweet sake for seasoning), dressing, tsuyu sauce or tare sauce for soba, udon, ramen, or pasta, mayonnaise, tomato ketchup, yeast extracts, meat extracts, fish or shellfish extracts, and the like.

The salty taste-enhanced spice may include, for example, beef flavor spice, pork flavor spice, crab flavor spice, Katsuobushi flavor spice, Niboshi flavor spice, chicken flavor spice, butter flavor spice, and the like.

The target food and drink in the present invention is not particularly limited and is widely applicable to food products. Examples thereof may include Japanese pickled vegetables(salted pickles, Takuan-zuke (yellow pickled radish), vegetables pickled in rice-bran paste, vegetables pickled in miso, vegetables pickled in sake lees, Fukujin-zuke (sliced vegetables pickled in soy sauce), pickled japanese leek, umeboshi, and the like); cooked rice prepared food (thin rice porridge, porridge of rice and vegetables, rice with hot tea, and the like); other processed agricultural food; beverages(tomato juice, vegetable juice, corn soup, and the like); processed sea food (fish meat ham and sausage, boiled fish paste, tube-shaped fish paste cake, fish dried with mirin, fish boiled down in soy, shredded and dried squid, and the like); processed meat food (hamburger steak, ham, sausage, pot sticker, and the like); dairy products (milk, cheese, cheese sauce, cream, butter, and the like); convenience food products; noodles; breads; confectionery (potato chips, rice cracker, cookie, and the like); salt-preserved products (lightly salted salmon, salted trout, cod roe, herring roe, caviar, salmon roe, salted salmon roe, and the like); salted fish guts (salted squid, salted bonito, salted sea urchin) and the like; soups (miso soup, clear soup, consommé, egg soup, seaweed soup, cream soup, and the like); prepared food such as curry, and the like.

### Example

The present invention will be explained in more detail showing Examples, but the invention is not limited to Examples. In Examples, "part" and "%" are based on a weight.

### (1) Preparation of Onion Extract

After outer skin was removed from 3000 kg of onions, they were washed with water and were ground into a size of about 3 mm using a food product grinder ("Comitrol (registered trademark) Processor" manufactured by Urschel Laboratories Incorporated). After that, they were pressed through a screw press machine to obtain about 2000 kg of onion juice.

Using a heating device 10 illustrated by Fig. 1, the onion juice was concentrated under reduced pressure. Into a tank was previously thrown 600 kg of the onion juice, and the onion juice was supplied to the heating device 10 at a flow rate of 500 kg per hour using a pump connected to the tank at a place directly underneath the tank. The heating device 10 was set at almost right angles to a floor face, and a rotation difference between an inner cylinder 12 and an outer cylinder 13, between which about 3 mm of a space was set, was set at 170 rotations per minute, and temperatures of wall surfaces 12a and 13a were set at 125°C. The onion juice, which had been heated in the heating device 10, was supplied to an evaporator, which was set at a reduced pressure condition of -0.055 to -0.065 MPa, moisture was evaporated, and then the resulting juice was supplied to the tank again. This circulation heat concentration under reduced pressure was performed for 10 hours to obtain about 50 kg of a concentrated onion extract having a Brix of 71%.

### (2) Preparation of Mixed Liquid of Onion Extract

The onion extract obtained from (1) and white superior soft sugar were mixed in a proportion shown in Table 6 to prepare mixed liquid of onion extract. A finely ground plant tissue product passing through a size of 140-mesh, contained in this mixed liquid of onion extract was 1.0% in terms of dry matter.

### [Table 6]

**Table 6 Recipe of mixed liquid of onion extract**

| Starting material | Ratio (% by weight) |
|---|---|
| Onion extract | 75.0 |
| White superior soft sugar | 17.5 |
| Water | 7.5 |
| Total | 100.0 |

### (3) Production of Salty Taste Enhancer

Using a portable reactor TPR1-TVS-N2-500 (manufactured by Taiatsu Techno Corporation) as the heating device, the mixed liquid of onion extract was subjected to a heat treatment in heating conditions shown in Table 7 to produce a salty taste enhancer (Example 1 and Comparative Examples 1 to 5 described below). The heating using the portable reactor was performed after warm water was previously heated to a temperature of about 150°C and the reactor was thoroughly warmed. In Example 1 and Comparative Examples 2, 3, and 5, the mixed liquid was taken out from the reactor to a place under an ordinary pressure immediately after the product temperature reached a predetermined temperature, and cooled. In Example 2, the mixed liquid of onion extract was subjected to a heat treatment using a double cylindrical heating device to produce a salty taste enhancer.

### (Example 1)

Using the portable reactor described above, 300 g of the mixed liquid of onion extract was subjected to a heat treatment. A jacket temperature was set at 180°C, and heating was performed while the liquid was stirred at the number of rotations of 1060 rpm. The heating was continued until the product temperature reached 160°C to obtain a salty taste enhancer. The time necessary until the product temperature reached 160°C was 12 minutes.

The obtained salty taste enhancer was subjected to a gas chromatography analysis under the analysis conditions described above, and it was found that the total of peak areas of furfural, 2-acetylfuran, 5-methylfurfural, and furfuryl alcohol was 2.46-fold of a peak area of decane, which was an internal standard substance, and a peak area of acetic acid was 0.26-fold of the peak area of decane, which was the internal standard substance. As for the sulfur-containing compounds, the total of peak areas of allyl methyl disulfide, dimethyl trisulfide, and dimethyl disulfide was 3.88-fold of the peak area of decane, which was the internal standard substance. The finely ground plant tissue product of onion was contained in an amount of 1% in the salty taste enhancer.

### (Example 2)

Using a heating device shown in Fig. 1, the mixed liquid of onion extract was subjected to a heat treatment. The heating device 10 was set at almost right angles to a floor face, and a rotation difference between an inner cylinder 12 and an outer cylinder 13, between which about 10 mm of a space was set, was set at 400 rotations per minute, and a temperature of a wall surface 13a was set at 177°C. Into a tank provided with a steam jacket was poured 20 kg of the mixed liquid of onion extract, and it was pre-heated until the product temperature reached 90°C while the liquid was stirred. This mixed liquid of onion extract was quantitatively supplied to the heating device 10 at a flow rate of 60 L per hour through a pump, and the product temperature was heated to 160°C. After that, the liquid was passed through a pipe having a volume of 1.5 L, which had been previously connected to the heating device 10, and then it was cooled to a product temperature of 70°C through a plate-type heat exchanger (NS08LSR-005-6-W manufactured by Izumi Food Machinery Co., Ltd.), thereby obtaining 6 kg of a salty taste enhancer. The pipe having a volume of 1.5 L, which was connected to the heating device 10, was immersed in an oil bath having a temperature of 160°C to prevent reduction of product temperature. A backpressure valve was connected to the plate-type heat exchanger at the back thereof to adjust an inner pressure to 0.7 MPa upon heating.

The obtained salty taste enhancer was subjected to a gas chromatography analysis under the analysis conditions described above, and it was found that the total of peak areas of furfural, 2-acetylfuran, 5-methylfurfural, and furfuryl alcohol was 2.80-fold of a peak area of decane, which was an internal standard substance, and a peak area of acetic acid was 0.10-fold of the peak area of decane, which was the internal standard substance. As for the sulfur-containing compounds, the total of peak areas of allyl methyl disulfide, dimethyl trisulfide, and dimethyl disulfide was 6.92-fold of the peak area of decane, which was the internal standard substance. The finely ground plant tissue product of onion was contained in an amount of 1% in the salty taste enhancer.

### (Comparative Example 1)

Using the portable reactor described above, 300 g of the mixed liquid of onion extract was subjected to a heat treatment. A jacket temperature was set at 140°C, and heating was performed while the liquid was stirred at the number of rotations of 1060 rpm. The time necessary until the product temperature reached 110°C was 7 minutes. When the product temperature reached about 110°C, the jacket temperature was controlled so that the product temperature was not over 110°C and it was held at 110°C for 70 minutes, thereby obtaining a salty taste enhancer.

The obtained salty taste enhancer was subjected to a gas chromatography analysis under the analysis conditions described above, and it was found that the total of peak areas of furfural, 2-acetylfuran, 5-methylfurfural, and furfuryl alcohol was 0.22-fold of a peak area of decane, which was an internal standard substance, and as for the sulfur-containing compounds, the total of peak areas of allyl methyl disulfide, dimethyl trisulfide, and dimethyl disulfide was 8.74-fold of the peak area of decane, which was the internal standard substance. Acetic acid was hardly detected.

### (Comparative Example 2)

Using the portable reactor described above, 300 g of the mixed liquid of onion extract was subjected to a heat treatment. A jacket temperature was set at 170°C, and heating was performed while the liquid was stirred at the number of rotations of 1060 rpm. The heating was continued until the product temperature reached 150°C to obtain a salty taste enhancer. The time necessary until the product temperature reached 150°C was 11 minutes.

The obtained salty taste enhancer was subjected to a gas chromatography analysis under the analysis conditions described above, and it was found that the total of peak areas of furfural, 2-acetylfuran, 5-methylfurfural. and furfuryl alcohol was 1.41-fold of a peak area of decane, which was an internal standard substance, and as for the sulfur-containing compounds, the total of peak areas of allyl methyl disulfide, dimethyl trisulfide. and dimethyl disulfide was 4.58-fold of the peak area of decane, which was the internal standard substance. Acetic acid was hardly detected.

### (Comparative Example 3)

Using the portable reactor described above, 300 g of the mixed liquid of onion extract was subjected to a heat treatment. A jacket temperature was set at 200°C, and heating was performed while the liquid was stirred at the number of rotations of 1060 rpm. The heating was continued until the product temperature reached 180°C to obtain a salty taste enhancer. The time necessary until the product temperature reached 150°C was 14 minutes.

The obtained salty taste enhancer was subjected to a gas chromatography analysis under the analysis conditions described above, and it was found that the total of peak areas of furfural, 2-acetylfuran, 5-methylfurfural, and furfuryl alcohol was 9.52-fold of a peak area of decane, which was an internal standard substance, and as for the sulfur-containing compounds, the total of peak areas of allyl methyl disulfide, dimethyl trisulfide, and dimethyl disulfide was 3.56-fold of the peak area of decane, which was the internal standard substance. A peak area of acetic acid was 0.48-fold of the peak area of decane, which was the internal standard substance.

### (Comparative Example 4)

Using the portable reactor described above, 300 g of the mixed liquid of onion extract was subjected to a heat treatment. A jacket temperature was set at 180°C, and heating was performed while the liquid was stirred at the number of rotations of 1060 rpm. The time necessary until the product temperature reached 160°C was 14 minutes. When the product temperature reached about 160°C, the jacket temperature was controlled so that the product temperature was not over 160°C and it was held at 160°C for 10 minutes, thereby obtaining a salty taste enhancer.

The obtained salty taste enhancer was subjected to a gas chromatography analysis under the analysis conditions described above, and it was found that the total of peak areas of furfural, 2-acetylfuran, 5-methylfurfural, and furfuryl alcohol was 8.32-fold of a peak area of decane, which was an internal standard substance, and as for the sulfur-containing compounds, the total of peak areas of allyl methyl disulfide, dimethyl trisulfide, and dimethyl disulfide was 2.06-fold of the peak area of decane, which was the internal standard substance. A peak area of acetic acid was 0.92-fold of the peak area of decane, which was the internal standard substance.

### (Comparative Example 5)

Using the portable reactor described above, 300 g of the mixed liquid of onion extract was subjected to a heat treatment. A jacket temperature was set at 220°C, and heating was performed while the liquid was stirred at the number of rotations of 1060 rpm. The heating was continued until the product temperature reached 200°C to obtain a salty taste enhancer. The time necessary until the product temperature reached 200°C was 15 minutes and 30 seconds.

The obtained salty taste enhancer was subjected to a gas chromatography analysis under the analysis conditions described above, and it was found that the total of peak areas of furfural, 2-acetylfuran, 5-methylfurfural, and furfuryl alcohol was 10.06-fold of a peak area of decane, which was an internal standard substance, and as for the sulfur-containing compounds, the total of peak areas of allyl methyl disulfide, dimethyl trisulfide, and dimethyl disulfide was 1.18-fold of the peak area of decane, which was the internal standard substance. A peak area of acetic acid was 1.72-fold of the peak area of decane, which was the internal standard substance.

The heating conditions and the amounts of the indicator aroma components in the obtained salty taste enhancers, in Examples 1 and 2 and Comparative Examples 1 to 5, are collectively shown in Table 7.

### [Table 7]

**Table 7 Relationship between heating conditions and amount of indicator aroma component**

| | Comparative Example 1 | Comparative Example 2 | Example 1 | Comparative Example 3 | Comparative Example 4 | Comparative Example 5 | Example 2 |
|---|---|---|---|---|---|---|---|
| Heating condition (product temperature reached/holding time) | 110°C/70 minutes | 150°C/temperature reached | 160°C/temperature reached | 180°C/temperature reached | 160°C/10 minutes | 200°C/temperature reached | 1 60°C/90 seconds |
| Time taken for product temperature to be reached (initial temperature: 60°C) | 7 minutes | 11 minutes | 12 minutes | 14 minutes | 14 minutes | 15 minutes and 30 seconds | one minute and 30 seconds |
| Furans (ratio of total of peak areas of furans to peak area of 1 ppm of decane (fold)) | 0.22 | 1.41 | 2.46 | 9.52 | 8.32 | 10.06 | 2.80 |
| Acetic acid (ratio of peak area of acetic acid to peak area of 1 ppm of decane (fold)) | 0.00 | 0.00 | 0.26 | 0.48 | 0.92 | 1.72 | 0.10 |
| Sulfur-containing compounds (ratio of total of peak areas of sulfur-containing compounds to peak area of 1 ppm of decane (fold)) | 8.74 | 4.58 | 3.88 | 3.56 | 2.06 | 1.18 | 6.92 |

### (Examples 3 and 4 and Comparative Examples 6 to 10: Influence Exerted by Heating Conditions, Amount of Furans, or Amount of Acetic Acid on Salty Taste Enhancing Effect)

In order to evaluate influence exerted by the heating condition in the production of the salty taste enhancer and the scorch smell and the bitter taste, which correlate to the amounts of the furans and the acetic acid in the salty taste enhancer, on the salty taste enhancing effect, consommé was made using each of the salty taste enhancers from Examples 1 and 2 and Comparative Examples 1 to 5 in a proportion shown in Table 8 (Examples 3 and 4, and Comparative Examples 6 to 10). Consommé having a proportion shown in Table 9 for comparison was also made.

### [Table 8]

**Table 8 Recipe of consommé (Note*)**

| Starting material | Proportion (% by weight) |
|---|---|
| Base of consommé | 1.22 |
| Salty taste enhancer | 0.25 |
| Water | 98.53 |
| Total | 100.00 |

| | |
|---|---|
| *Salt was contained in a content of 45.3% in the base of the consommé, and the consommé had a salt concentration of 0.55%. | |

### [Table 9]

**Table 9 Consommé for comparison (Note*)**

| Starting material | Proportion (% by weight) |
|---|---|
| Base of consommé | 1.22 |
| Salt | 0.10 |
| Water | 98.68 |
| Total | 100.00 |

| | |
|---|---|
| *Salt was contained in a content of 45.3% in the base of the consommé, and the consommé had a salt concentration of 0.65%. | |

The consommé, made as described above, was evaluated by 10 panelists (5 males and 5 females). The evaluation was performed for the consommé whose temperature was adjusted to 60°C based on evaluation criteria in Table 10 (the maximum point: 50, the minimum point: 10). The results are shown in Table 11 together with the amounts of the indicator aroma components.

### [Table 10]

**Table 10 Sensory evaluation criteria**

| |
|---|
| Point 5: The impact of a first taste and the retention of an aftertaste were satisfactorily felt compared to those of the product for comparison, and the salty taste is strong and the salty taste enhancing effect is high. |
| Point 4: The impact of a first taste and the retention of an aftertaste were felt compared to those of the product for comparison, and the salty taste is slightly strong and the salty taste enhancing effect is slightly high. |
| Point 3: The salty taste is equal to that of the product for comparison, and the salty taste enhancing effect can be confirmed. |
| Point 2: The impact of a first taste and the retention of an aftertaste were slightly weak compared to those of the product for comparison, and the salty taste is felt slightly weak and the salty taste enhancing effect is slightly low. |
| Point 1: The impact of a first taste and the retention of an aftertaste were weak compared to those of the product for comparison, and the salty taste is felt weak and it is felt that there is no salty taste enhancing effect. |

### [Table 11]

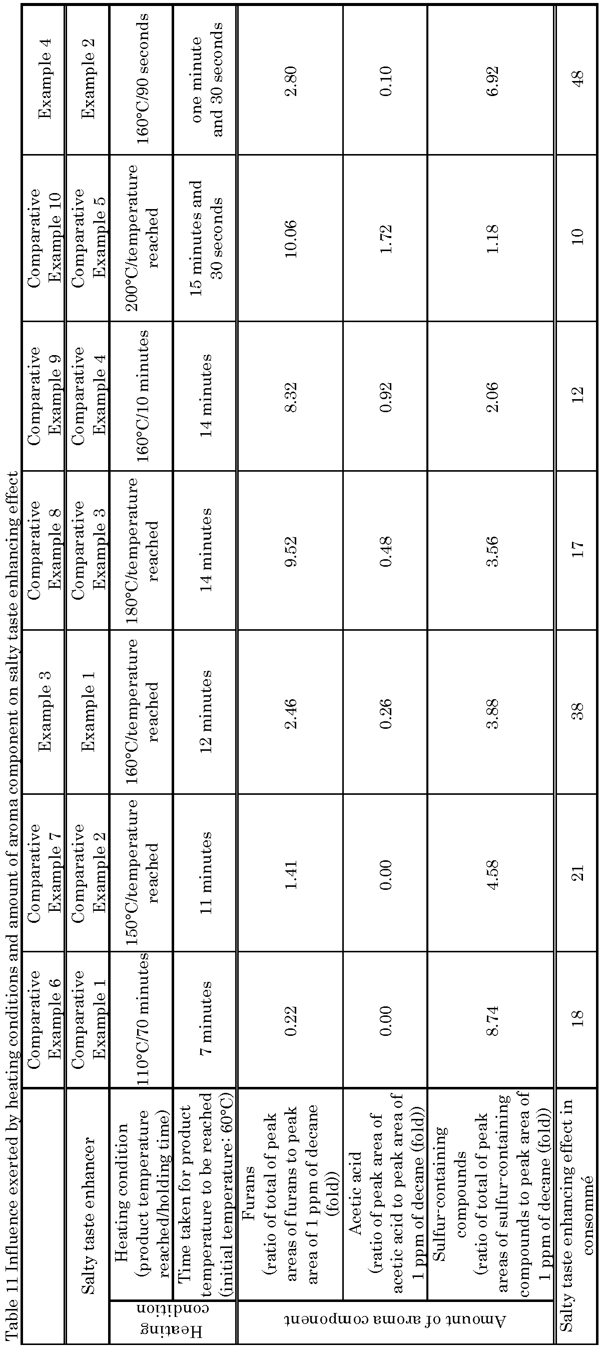

As shown in Table 11, in the consommé from Example 3 or 4 using the salty taste enhancer of Example 1 or 2, the impact of the first taste and the retention of the aftertaste were satisfactorily felt, compared to those of the consommé from each of Comparative Examples 6 to 10 using the salty taste enhancer of each of Comparative Examples 1 to 5, and the salty taste enhancing effect was strong. In particular, the consommé from Example 4 containing the salty taste enhancer of Example 2, produced by using the double cylindrical heating device, had the further stronger salty taste enhancing effect than that of the consommé from Example 3 containing the salty taste enhancer of Example 1, produced by using the portable reactor. The consommé from Example 3 or 4 had the stronger salty taste enhancing effect than that of the consommé for comparison. The consommé from Example 3 or 4 had a salt concentration of 0.55%, and the consommé for comparison had a salt concentration of 0.65%, and thus the salty taste enhancer of Example 1 or 2 enhanced 0.1% or more of the salty taste, in 0.65% of the salt in the consommé for comparison. The salty taste enhancing effect was 15.3% (0.1/0.65) or more. On the other hand, the consommé from Comparative Example 6 or 7 containing the salty taste enhancer of Comparative Example 1 or 2, whose heat treatment temperature was low, had the weak impact of the first taste and the weak retention of the aftertaste; and the consommé from each of Comparative Examples 8 to 10 containing the salty taste enhancer of each of Comparative Examples 3 to 5, whose heat treatment temperature was high or whose heat treatment time was long, had the scorch smell feeling or the bitter taste feeling, and the balance of flavor was disrupted.

### «Study about Influence Exerted by Finely Ground Plant Tissue Product or Kind of Plant on Salty Taste Enhancing Effect»

In order to evaluate influence exerted by the finely ground plant tissue product in the salty taste enhancer or the kind of the derived plant on the salty taste enhancing effect, salty taste enhancers in which the finely ground plant tissue product was altered were produced according to the following outline.

### (1) Preparation of Finely Ground Plant Tissue Product from Onion or Garlic

### (a) Finely Ground Plant Tissue Product of Onion

30 kg of grated onion was squeezed through a juice extractor (juice extractor GP-E1503; GREEN POWER) to extract juice. The juice was centrifuged (6574 G, 15 minutes) through a centrifugal machine to obtain 966 g of a precipitate. The precipitate was filtered through a metal mesh (an aperture of 106 µm, 140-mesh). The fraction which had been passed through the mesh was centrifuged (6574 G, 15 minutes) through the centrifugal machine again, and 780 g of a precipitate was recovered, which was used as a finely ground plant tissue product of onion. This finely ground plant tissue product of onion had a moisture content of 80%, and had a weight of 156 g in dry matter.

### (b) Finely Ground Plant Tissue Product of Garlic

Commercially available garlic was cut into pieces having an appropriate size, and the pieces were squeezed through a juice extractor (Power Juicer; SHOP JAPAN) to extract juice. The juice was centrifuged (6574 G, 15 minutes) through a centrifugal machine to obtain a precipitate. The precipitate was filtered through a metal mesh (an aperture of 106 µm, 140-mesh). The fraction which had been passed through the mesh was centrifuged (6574 G, 15 minutes) through the centrifugal machine again, and 54 g of a precipitate was recovered, which was used as a finely ground plant tissue product of garlic. This finely ground plant tissue product of garlic had a moisture content of 70%, and had a weight of 16.5 g in dry matter.

### (2) Preparation of Onion Extract Containing 0% of Finely Ground Plant Tissue Product

To 1200 g of mixed liquid of onion extract, which had been made in the same manner as in "(2) Preparation of Mixed Liquid of Onion Extract" of paragraph [0094], was added 1200 g of water to perform a two-fold dilution. This liquid was centrifuged (6574 G, 15 minutes) to obtain 2150 g of a supernatant. The supernatant, 2150 g, was concentrated under a reduced pressure (0 to 10 mbar) in an evaporator. When the Brix value reached 70% and the weight thereof became 1150 g, the concentration under reduced pressure was stopped. The resulting product was used as an onion extract containing 0% of the finely ground plant tissue product.

### (3) Onion Extract Containing 0% of Finely Ground Plant Tissue Product

400 g of the onion extract containing 0% of the finely ground plant tissue product was used as the onion extract containing 0% (a weight of dry matter) of the finely ground plant tissue product.

### (4) Onion Extract Containing 1% of Finely Ground Plant Tissue Product of Garlic

When 13.2 g of the finely ground plant tissue product of garlic obtained in (1) above was added to 386.8 g of the onion extract containing 0% of the finely ground plant tissue product obtained in (2) above (1% of garlic solid weight in dry matter), the Brix value was about 70%. The resulting extract was used as an onion extract containing 1% (a weight of dry matter) of the finely ground plant tissue product of garlic.

### (5) Preparation of Onion Extract Containing 5%, 10%, or 15% (a weight of dry matter) of Finely Ground Plant Tissue Product

### (a) Onion Extract Containing 5% of Finely Ground Plant Tissue Product of Onion

When 100 g of the finely ground plant tissue product of onion obtained in (1) above was added to 371.2 g of the onion extract, prepared in "(1) Preparation of Onion Extract" of paragraph [0093], the Brix value was less than 70%, and thus the mixture was heated to adjust the Brix value. When the Brix value reached 70% and the weight thereof became 400 g, the heating was stopped. The resulting product was used as an onion extract containing 5% (a weight of dry matter) of the finely ground plant tissue product of onion.

### (b) Onion Extract Containing 10% of Finely Ground Plant Tissue Product of Onion

When 200 g of the finely ground plant tissue product of onion obtained in (1) above was added to 342.8 g of the onion extract, the Brix value was less than 70%, and thus the mixture was heated to adjust the Brix value. When the Brix value reached 70% and the weight thereof became 400 g, the heating was stopped. The resulting product was used as an onion extract containing 10% (a weight of dry matter) of the finely ground plant tissue product of onion.

### (c) Onion Extract Containing 15% of Finely Ground Plant Tissue Product of Onion

When 300 g of the finely ground plant tissue product of onion obtained in (1) above was added to 314.28 g of the onion extract, the Brix value was less than 70%, and thus the mixture was heated to adjust the Brix value. When the Brix value reached 70% and the weight thereof became 400 g, the heating was stopped. The resulting product was used as an onion extract containing 15% (a weight of dry matter) of the finely ground plant tissue product of onion.

### (6) Production of Salty Taste Enhancer

300 g of the onion extract, whose finely ground plant tissue product amount had been adjusted as above, was subjected to heat treatment at a product temperature of 160°C in a portable reactor to obtain a salty taste enhancer of each of Examples 5 to 7 and Comparative Examples 11 and 12 described below. The heating using the portable reactor was performed after warm water was previously heated to a temperature of about 150°C and the reactor was thoroughly warmed. Immediately after the product temperature reached a predetermined temperature, the resulting product was taken out from the reactor to a place under an ordinary pressure and cooled. The jacket temperature was set at 180°C, and the stirring was performed at 1060 rpm. The time necessary to reach 160°C was from about 14 minutes to 16 minutes.

### (Comparative Example 11)

The onion extract containing 0% of the finely ground plant tissue product was heated under the conditions described above to obtain a salty taste enhancer of Comparative Example 11.

### (Example 5)

The onion extract containing 5% of the finely ground plant tissue product of onion was heated under the conditions described above to obtain a salty taste enhancer of Example 5.

### (Example 6)

The onion extract containing 10% of the finely ground plant tissue product of onion was heated under the conditions described above to obtain a salty taste enhancer of Example 6.

### (Comparative Example 12)

The onion extract containing 15% of the finely ground plant tissue product of onion was heated under the conditions described above to obtain a salty taste enhancer of Comparative Example 12. In this case, however, the local heating occurred because of a too large amount of the finely ground plant tissue product, and thus many burnt parts were generated on the heating surface.

### (Example 7)

The onion extract containing 1% of the finely ground plant tissue product of garlic was heated under the conditions described above to obtain a salty taste enhancer of Example 7.

### (Examples 8 to 11 and Comparative Examples 13 and 14)

In order to evaluate the influence exerted by the finely ground plant tissue product or the kind of the derived plant on the salty taste enhancing effect, consommé was made using the salty taste enhancer from each of Examples 1 and 5 to7, and Comparative Examples 11 and 12 in a proportion shown in Table 8 (Examples 8 to 11, and Comparative Examples 13 and 14). The consommé, made as above, was evaluated by 10 panelists (5 males and 5 females). The evaluation was performed for the consommé whose temperature was adjusted to 60°C, comparing it with the consommé for comparison shown in Table 9 based on the evaluation criteria in Table 10 (the maximum point: 50, the minimum point: 10). The results are shown in Table 12 together with the amounts of the indicator aroma components.

### [Table 12]

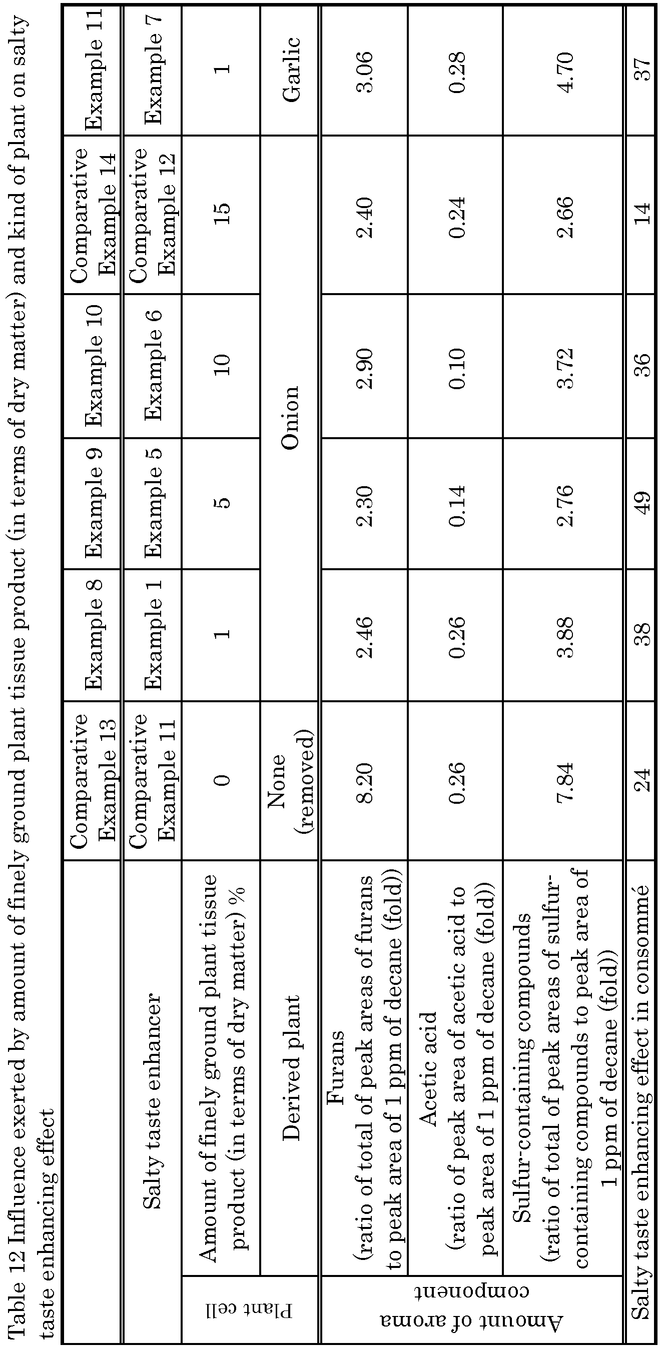

As shown in Table 12, in the consommé from each of Examples 8 to 11 using the salty taste enhancer of each of Examples 1 and 5 to 7, containing the finely ground plant tissue product, the impact of the first taste and the retention of the aftertaste were satisfactorily felt, compared to those of the consommé from Comparative Example 13 or 14, and the salty taste enhancing effect was stronger than that of the consommé for comparison. The consommé from each of Examples 8 to 11 had a salt concentration of 0.55%, and the consommé for comparison shown in Table 9 had a salt concentration of 0.65%, and thus the salty taste enhancer of each of Examples 5 to 7 enhanced 0.1% or more of the salty taste, in 0.65% of the salt in the consommé for comparison. The salty taste enhancing effect was 15.3% (0.1/0.65) or more. The difference in the salty taste enhancing effect was not so great between the finely ground plant tissue product of onion and the finely ground plant tissue product of garlic, and thus the salty taste enhancing effect was confirmed in the salty taste enhancers using any of the two. On the other hand, the consommé from Comparative Example 13 containing the salty taste enhancer of Comparative Example 11 having no finely ground plant tissue product had the strong impact of the first taste to some extent, but the weak retention of the aftertaste, and thus the salty taste enhancing effect was not so strongly felt. When the amount of the finely ground plant tissue product in the salty taste enhancer was increased, the salty taste enhancing effect was enhanced up to about 5% by weight, but the effect became weak at 10% by weight. In addition, when the amount of the finely ground plant tissue product was increased to 15% by weight, as the salty taste enhancer of Comparative Example 12, the solid matter adhered to the heating surface and burnt parts were generated, strong caramelized smell and astringency were emphasized as the flavor, the balance of flavor was disrupted, and the salty taste enhancing effect was deteriorated.

### (Examples 12 and 13 and Comparative Examples 15 to 19)

In order to evaluate the influence exerted by the heating condition in the production of the salty taste enhancer and the scorch smell and the bitter taste, which correlate to the amounts of the furans, the sulfur-containing compounds, and the acetic acid in the salty taste enhancer, on the salty taste enhancing effect, cheese sauce was produced using the salty taste enhancer of each of Examples 1 and 2 and Comparative Examples 1 to 5 in proportions shown in Table 13 (Examples 12, 13, and Comparative Examples 15 to 19). Cheese sauce for comparison was also produced in proportions shown in Table 14. As chicken bouillon in Table 13 and Table 14, a solution obtained by dissolving 5.3 g of "Chicken Consomme"(manufactured by Ajinomoto Co., Inc.) in 430 g of warm water was used. A salt concentration of the cheese sauce was measured using a digital salinometer "ES-421" manufactured by Atago Co., Ltd.

### [Table 13]

**Table 13 Recipe of cheese sauce Note*)**

| Starting material | Proportions (% by weight) |
|---|---|
| Chicken bouillon | 66.4 |
| Milk | 16.6 |
| Cheddar cheese | 3.3 |
| Gruyère cheese | 3.3 |
| Comté cheese | 3.3 |
| Camembert cheese | 3.3 |
| Potato starch | 2.0 |
| Emmental cheese | 1.7 |
| Salty taste enhancer | 0.1 |
| Total | 100.1 |

| | |
|---|---|
| *This cheese sauce had a salt concentration of 0.65%. | |

### [Table 14]

**Table 14 Cheese sauce for comparison (Note*)**

| Starting material | Proportions (% by weight) |
|---|---|
| Chicken bouillon | 66.4 |
| Milk | 16.6 |
| Cheddar cheese | 3.3 |
| Gruyère cheese | 3.3 |
| Comté cheese | 3.3 |
| Camembert cheese | 3.3 |
| Potato starch | 2.0 |
| Emmental cheese | 1.7 |
| Salt | 0.1 |
| Total | 100.1 |

| | |
|---|---|
| * This cheese sauce had a salt concentration of 0.75%. | |

The cheese sauce, made as described above, was evaluated by 10 panelists (5 males and 5 females). The evaluation was performed for the sauce whose temperature was adjusted to 60°C, compared to the cheese sauce for comparison shown in Table 14 based on evaluation criteria in Table 10 (the maximum point: 50, the minimum point: 10). The results are shown in Table 15.

### [Table 15]

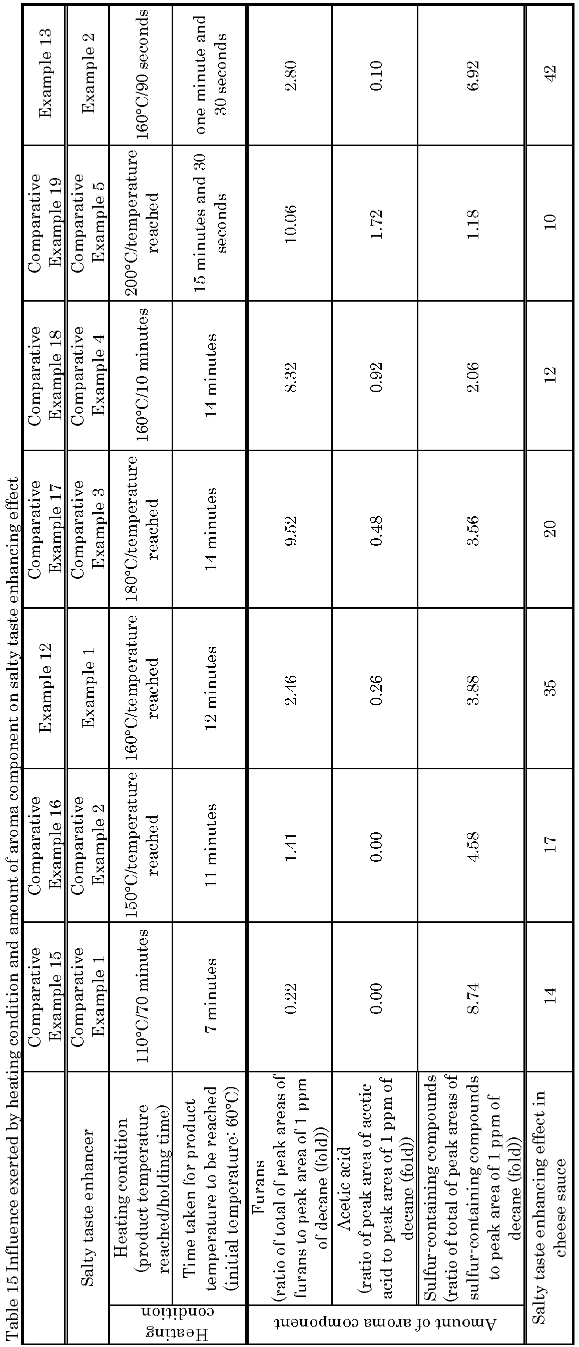

As shown in Table 15, in the cheese sauce from Example 12 or 13 using the salty taste enhancer of Example 1 or 2, the impact of the first taste and the retention of the aftertaste were satisfactorily felt, compared to those of the cheese sauce from each of Comparative Examples 15 to 19 using the salty taste enhancer of each of Comparative Examples 1 to 5, salty taste enhancing effect was strong, and the flavor of the cheese was felt strong. The cheese sauce from Example 12 or 13 had the stronger salty taste enhancing effect than that of the cheese sauce for comparison shown in Table 14. The cheese sauce from Example 12 or 13 had a salt concentration of 0.65%, and the cheese sauce for comparison shown in Table 14 had a salt concentration of 0.75%, and thus the salty taste enhancer of Example 1 or 2 enhanced 0.1% or more of the salty taste, in 0.75% of the salt in the cheese sauce for comparison shown in Table 14. The salty taste enhancing effect was 13.3% (0.1/0.75) or more. In particular, the cheese sauce from Example 13 containing the salty taste enhancer of Example 2, produced by using the double cylindrical heating device, had the further stronger salty taste enhancing effect than that of the sauce from Example 12 containing the salty taste enhancer of Example 1, produced by using the portable reactor. On the other hand, the cheese sauce from Comparative Example 15 or 16 containing the salty taste enhancer of Comparative Example 1 or 2, whose heat treatment temperature was low, had the weak impact of the first taste and the weak retention of the aftertaste; and the cheese sauce from each of Comparative Examples 17 to 19 containing the salty taste enhancer of each of Comparative Examples 3 to 5, whose heat treatment temperature was high or whose heat treatment time was long, were felt the scorch smell or the bitter taste, and the balance of flavor was disrupted.

### (Examples 14 to 16 and Comparative Examples 20 and 21)

In order to evaluate the influence exerted by the finely ground plant tissue product and the kind of the derived plant on the salty taste enhancing effect, cheese sauce was produced using the salty taste enhancer of each of Examples 1 and 5 to 7 and Comparative Examples 11 and 12 in proportions shown in Table 13 (Examples 12, 14 to 16, and Comparative Examples 20 and 21). The cheese sauce, made as described above, was evaluated by 10 panelists (5 males and 5 females). The evaluation was performed for the sauce whose temperature was adjusted to 60°C, compared to the cheese sauce for comparison shown in Table 14 based on evaluation criteria in Table 10 (the maximum point: 50, the minimum point: 10). The results are shown in Table 16 together with the results of Example 12.

### [Table 16]

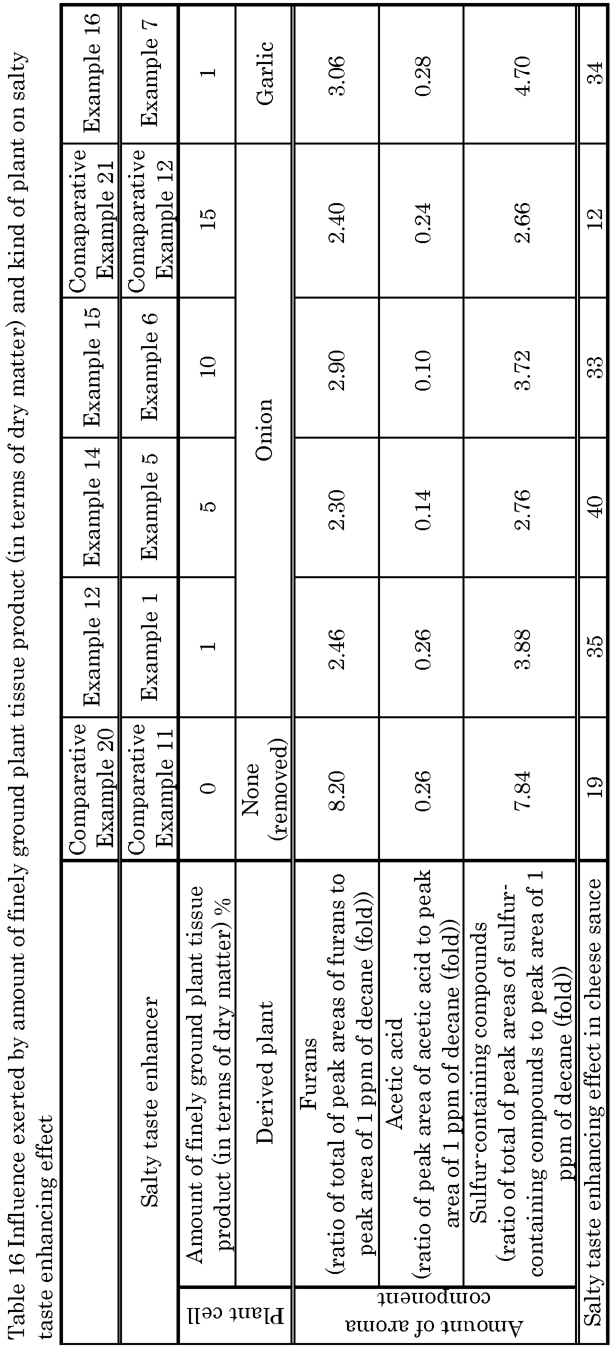

As shown in Table 16, in the cheese sauce from Example 12 and 14 to 16 using the salty taste enhancer of each of Examples 1 and 5 to 7 having finely ground plant tissue product, the impact of the first taste and the retention of the aftertaste were satisfactorily felt, compared to those of the cheese sauce from Comparative Example 20 or 21, salty taste enhancing effect was strong, and it was felt that not only the salty taste enhancing effect but also the flavor of the cheese strongly enhanced. The cheese sauce from each of Examples 12 and 14 to 16 had also the stronger salty taste enhancing effect than that of the cheese sauce for comparison shown in Table 14. The cheese sauce from each of Examples 12 and 14 to 16 had a salt concentration of 0.65%, and the cheese sauce for comparison shown in Table 14 had a salt concentration of 0.75%, and thus the salty taste enhancer each of Example 1 and 5 to 7 enhanced 0.1% or more of the salty taste, in 0.75% of the salt in the cheese sauce for comparison. The salty taste enhancing effect was 13.3% (0.1/0.75) or more. The difference in the salty taste enhancing effect was not so great between the finely ground plant tissue product of onion and the finely ground plant tissue product of garlic, and thus the salty taste enhancing effect was confirmed in the salty taste enhancers using any of the two. On the other hand, the cheese sauce from Comparative Example 20 containing the salty taste enhancer of Comparative Example 11 having no finely ground plant tissue product had the impact of the first taste to some extent, but the weak retention of the aftertaste, and thus the salty taste enhancing effect was not so strongly felt. When the amount of the finely ground plant tissue product in the salty taste enhancer was increased, the salty taste enhancing effect was enhanced up to about 5% by weight, but the effect became weak at 10% by weight. In addition, when the amount of the finely ground plant tissue product was increased to 15% by weight, as the salty taste enhancer of Comparative Example 12, the finely ground plant tissue product adhered to the heating wall surface of the heating device and burnt parts were generated, strong caramelized smell and astringency were emphasized as the flavor, the balance of flavor was disrupted, and the salty taste enhancing effect was deteriorated.

### (Production Example 1: Production of Flavor Retention Material according to Enzyme Treatment)

A mixture containing dry onion and having proportions shown in Table 17, 120 kg, was subjected to an enzyme treatment at 45°C for 6 hours, and then the resulting product was heated at 90°C for 10 minutes to inactivate the enzymes, thereby obtaining 116 kg of enzyme-treated onion liquid. The enzyme used were all enzymes manufactured by Shinnihon Chemicals Corporation. This enzyme-treated onion liquid was filtered through a metal mesh (an aperture of 106 µm, 140-mesh) to obtain 110 kg of an enzyme-treated onion filtrate. In order to determine an amount of a finely ground plant tissue product of onion contained in 100 g of the filtrate, 100 g of the filtrate was centrifuged (6574 G, fifteen minutes) in a centrifugal machine, and it was found that the finely ground plant tissue product of onion was contained in an amount of 15 g and the flavor retention material formed of this finely ground plant tissue product of onion had a moisture content of 80%.

### [Table 17]

**Table 17 Recipe in enzyme treatment**

| | Proportion |
|---|---|
| Dry onion | 16.60% |
| Sumizyme C (*1) | 0.500% |
| Sumizyme MC (*2) | 0.100% |
| Sumizyme 2000 (*3) | 0.050% |
| Water | 82.75% |

| | |
|---|---|
| (*1) Pectinase (*2) Cellulase (*3) Glucoamylase | |

### (Production Example 2: Production of flavor retention material using enzyme-treated liquid)

Using a heating device 10 illustrated by Fig. 1, the enzyme-treated onion filtrate obtained in Production Example 1 was concentrated under reduced pressure. Into a tank was previously thrown 100 kg of the enzyme-treated onion filtrate, and then the onion juice was supplied to the heating device 10 at a flow rate of 500 kg per hour using a pump connected to the tank at a place directly underneath the tank. The heating device 10 was set at almost right angles to a floor face, and a rotation difference between an inner cylinder 12 and an outer cylinder 13, between which about 3 mm of a space was set, was set at 170 rotations per minute, and temperatures of wall surfaces 12a and 13a were set at 125°C. The onion juice, which had been heated in the heating device 10, was supplied to an evaporator, which was set at a reduced pressure condition of -0.055 to -0.065 MPa, moisture was evaporated, and then the resulting juice was supplied to the tank again. This circulation heat concentration under reduced pressure was performed for 1.8 hours to obtain about 18 kg of a concentrated onion extract A having a Brix of 70%. This onion extract A, 100 g, contained 12.7 g of the finely ground plant tissue product of onion (in terms of dry matter).

### (Example 17)

The onion extract A (12.7% (a weight of dry matter) of the finely ground plant tissue product of onion) was mixed with the onion extract (1% (a weight of dry matter) of the finely ground plant tissue product of onion) before the heating, used in Example 1, thereby preparing an onion extract A-1 whose concentration of the finely ground plant tissue product of onion was adjusted to 5% (a weight of dry matter).

Then, this onion extract A-1 was heated until the product temperature reached 160°C using a portable reactor, which was the heating device, in the same manner as in Example 1, thereby obtaining a salty taste enhancer. The time necessary until the product temperature reached 160°C was 12 minutes.

The obtained salty taste enhancer was subjected to a gas chromatography analysis under the analysis conditions described above, and it was found that the total of peak areas of furfural, 2-acetylfuran, 5-methylfurfural, and furfuryl alcohol was 3.73-fold of a peak area of decane, which was an internal standard substance, and a peak area of acetic acid was 0.11-fold of the peak area of decane, which was the internal standard substance. As for the sulfur-containing compounds, the total of peak areas of allyl methyl disulfide, dimethyl trisulfide, and dimethyl disulfide was 2.91-fold of the peak area of decane, which was the internal standard substance. The finely ground plant tissue product of onion was contained in an amount of 5% (a weight of dry matter) in the salty taste enhancer.

### (Example 18)

As similar to Example 17, the onion extract A (12.7% (a weight of dry matter) of the finely ground plant tissue product of onion) was mixed with the onion extract (1% (a weight of dry matter) of the finely ground plant tissue product of onion) before the heating, used in Example 1, thereby preparing an onion extract B-1 whose concentration of the finely ground plant tissue product of onion was adjusted to 10% (a weight of dry matter).

Then, this onion extract B-1 was heated until the product temperature reached 160°C using a portable reactor, which was the heating device, in the same manner as in Example 17, thereby obtaining a salty taste enhancer. The time necessary until the product temperature reached 160°C was 12 minutes.

The obtained salty taste enhancer was subjected to a gas chromatography analysis under the analysis conditions described above, and it was found that the total of peak areas of furfural, 2-acetylfuran, 5-methylfurfural, and furfuryl alcohol was 3.81-fold of a peak area of decane, which was an internal standard substance, and a peak area of acetic acid was 0.19-fold of the peak area of decane, which was the internal standard substance. As for the sulfur-containing compounds, the total of peak areas of allyl methyl disulfide, dimethyl trisulfide, and dimethyl disulfide was 3.09-fold of the peak area of decane, which was the internal standard substance. The finely ground plant tissue product of onion was contained in an amount of 10% (a weight of dry matter) in the salty taste enhancer.

### (Examples 19 and 20)

Using the salty taste enhancer obtained in Example 17 and 18, consommé was made in proportions shown in Table 8 (Examples 19 and 20). The thus made consommé was evaluated by 10 panelists (5 males and 5 females). The evaluation was performed for the consommé whose temperature was adjusted to 60°C, compared to the consommé for comparison shown in Table 9 based on evaluation criteria in Table 10 (the maximum point: 50, the minimum point: 10). The results are shown in Table 18.

### [Table 18]

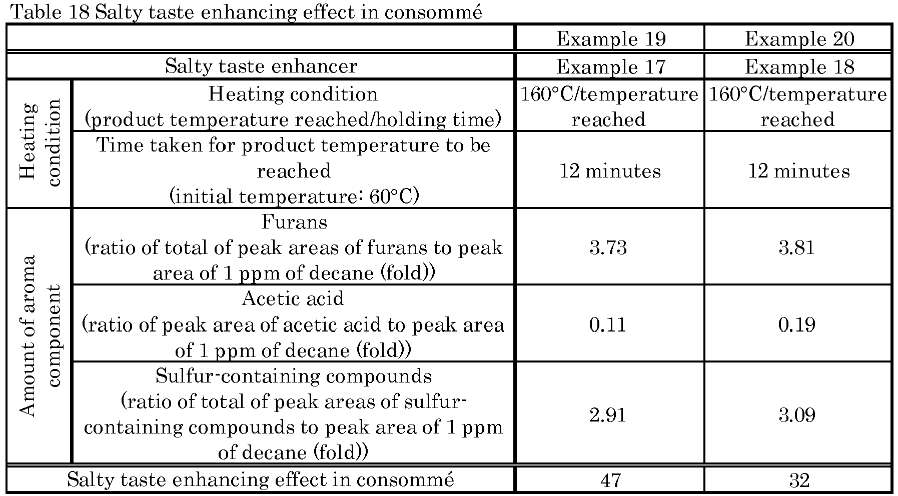

As shown in Table 18, in the consommé from Example 19 or 20 using the salty taste enhancer of Examples 17 or 18, the impact of the first taste and the retention of the aftertaste were satisfactorily felt, and the salty taste enhancing effect was stronger than that of the consommé for comparison. The consommé from Example 19 or 20 had a salt concentration of 0.55%, and the consommé for comparison had a salt concentration of 0.65%, and thus the salty taste enhancer of Example 17 or 18 enhanced 0.1% or more of the salty taste, in 0.65% of the salt in the consommé for comparison. The salty taste enhancing effect was 15.3% (0.1/0.65) or more.

### (Examples 21 and 22)

Using the salty taste enhancer obtained in Example 17 and 18, cheese sauce was made in proportions shown in Table 13 (Examples 21 and 22). The thus made cheese sauce was evaluated by 10 panelists (5 males and 5 females). The evaluation was performed for the cheese sauce whose temperature was adjusted to 60°C, compared to the cheese sauce for comparison shown in Table 14 based on evaluation criteria in Table 10 (the maximum point: 50, the minimum point: 10). The results are shown in Table 19.

As shown in Table 19, in the cheese sauce from Example 21 or 22 using the salty taste enhancer of Example 17 or 18, the impact of the first taste and the retention of the aftertaste were satisfactorily felt, and the salty taste enhancing effect was stronger than that of the cheese sauce for comparison. It was felt that not only the salty taste enhancing effect but also the flavor of the cheese strongly enhanced. The cheese sauce from Example 21 or 22 had a salt concentration of 0.65%, and the cheese sauce for comparison had a salt concentration of 0.75%, and thus the salty taste enhancer of Example 17 or 18 enhanced 0.1% or more of the salty taste, in 0.75% of the salt in the cheese sauce for comparison. The salty taste enhancing effect was 13.3% (0.1/0.75) or more.

### [Table 19]

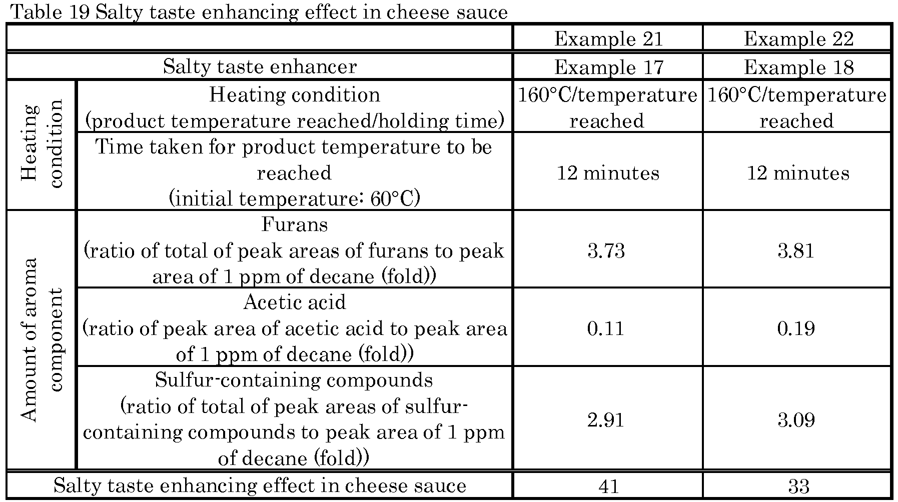

### Reference Signs List

- 10: Double cylindrical heating device
- 11: Heating vessel
- 12: Inner cylinder
- 12a: Exterior wall surface
- 13: Outer cylinder
- 13a: Internal wall surface
- 14: Space
- 14a: Supply port
- 14b: Exhaust port

## Claims

1. A salty taste enhancer comprising a finely ground plant tissue product of a liliaceae vegetable of onion and/or a garlic in which at least a part of cell walls is destroyed and which passes through a size of 140-mesh (140-mesh; USA), and a flavor component including a Maillard reaction product including furans selected from furfural, 2-acetylfuran, 5-methylfurfural, or furfuryl alcohol, and the total peak area of the furans is 2.0-fold or more of a peak area of decane when 1 ppm of the decane is added to the salty taste enhancer in a gas chromatograph, and a sulfur-containing compound wherein the sulfur-containing compound is dimethyl trisulfide, dimethyl disulfide, or allylmethyl disulfide, and the total peak area of the sulfur-containing compounds is 2.76-fold or more of a peak area of decane when 1 ppm of the decane is added to the salty taste enhancer in a gas chromatograph.

2. The salty taste enhancer according to claim 1, which includes the finely ground plant tissue product in a content of 0.9 to 10.0% by weight in terms of dry matter.

3. The salty taste enhancer according to claim 1 or 2, wherein the finely ground plant tissue product includes a sterol which exists in a state in which it is exposed from or flows out of the cell walls destroyed to the outside.

4. The salty taste enhancer according to claim 3, wherein the sterol includes a sterol or a sterol fatty acid ester shown by the following general formula (1): 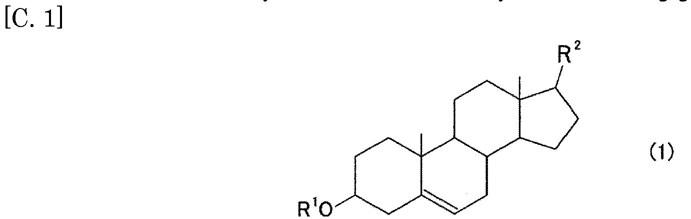 wherein R¹ represents a hydrogen atom or a fatty acid residue, and R² represents a hydrocarbon group including no double bond.

5. The salty taste enhancer according to claim 4, wherein the sterol or sterol fatty acid ester is a β-sitosterol or a β-sitosterol fatty acid ester.

6. The salty taste enhancer according to any one of claims 1 to 5, wherein the liliaceae vegetable is onion.

7. The salty taste enhancer according to any one of claims 1 to 6, wherein the finely ground plant tissue product of the liliaceae vegetable is obtained by grinding a liliaceae vegetable, squeezing a liliaceae vegetable to extract juice, subjecting a raw liliaceae vegetable to an enzyme treatment, or adding water to a dried liliaceae vegetable and then subjecting it to an enzyme treatment.

8. The salty taste enhancer according to any one of claims 1 to 7, wherein the flavor component has flavor enhanced by cooking with heat.

9. The salty taste enhancer according to any one of claims 1 to 8, wherein a peak area of acetic acid is 0.28-fold or less of a peak area of decane when 1 ppm of the decane is added to the salty taste enhancer in a gas chromatograph.

10. The salty taste enhancer according to any one of claims 1 to 9, which includes, as the sulfur-containing compound, at least one product of thiophenes and sulfides.

11. The salty taste enhancer according to any one of claims 1 to 10, which is in the state of a paste containing moisture.

12. The salty taste enhancer according to any one of claims 1 to 11, which includes an excipient and is in the state of a powder.

13. A method for producing a salty taste enhancer, comprising heating liquid of a mashed liliaceae vegetable of onion and/or a garlic, juice of a liliaceae vegetable of onion and/or a garlic, enzyme-treated liquid of a liliaceae vegetable of onion and/or a garlic, or a concentrate thereof to obtain the salty taste enhancer according to any one of claims 1 to 10.

14. The method for producing a salty taste enhancer according to claim 13, comprising the steps of: introducing the liquid of a mashed liliaceae vegetable of onion and/or a garlic, the juice of a liliaceae vegetable of onion and/or a garlic, the enzyme-treated liquid of a liliaceae vegtetable of onion and/or a garlic, or the concentrate thereof into a heating vessel in a heating device; forcibly bringing it into contact with a heating surface provided in the vessel; and cooking it with heat while it is moved along the heating surface in a state in which it is almost uniformly expanded to a thin film state.

15. The method for producing a salty taste enhancer according to claim 13 or 14, wherein a heating temperature is 160°C or higher.

16. A method for enhancing a salty taste of food and drink, comprising adding the salty taste enhancer according to any one of claims 1 to 12 to food and drink.

## Patentansprüche

1. Salzgeschmacksverstärker, enthaltend ein fein gemahlenes Pflanzengewebeprodukt einer Liliengewächs-Nahrungspflanze in Form einer Zwiebel und/oder von Knoblauch, bei dem mindestens ein Teil der Zellwände zerstört ist und das durch ein Sieb von 140 mesh (140 mesh, USA) hindurchtritt, und eine ein Maillard-Reaktionsprodukt aufweisende Geschmackskomponente, die Furane ausgewählt aus Furfural, 2-Acetylfuran, 5-Methylfurfural oder Furfurylalkohol enthält, und bei der die Gesamtpeakfläche der Furane 2,0-fach oder mehr einer Peakfläche von Dekan ist, wenn 1 ppm des Dekans dem Salzgeschmacksverstärker in einem Gaschromatographen zugesetzt wird, und eine schwefelhaltige Verbindung, wobei die schwefelhaltige Verbindung Dimethyltrisulfid, Dimethyldisulfid oder Allylmethyldisulfid ist, und wobei die Gesamtpeakfläche der schwefelhaltigen Verbindungen 2,76-fach oder mehr einer Peakfläche von Dekan ist, wenn 1 ppm des Dekans dem Salzgeschmacksverstärker in einem Gaschromatographen zugesetzt wird.

2. Salzgeschmacksverstärker nach Anspruch 1, der das fein gemahlene Pflanzengewebeprodukt in einem Gehalt von 0,9 bis 10,0 Gewichts-% bezogen auf trockene Materie enthält.

3. Salzgeschmacksverstärker nach Anspruch 1 oder 2, wobei das fein gemahlene Pflanzengewebeprodukt ein Sterol enthält, das in einem Zustand vorliegt, in dem es von den zerstörten Zellwänden freigesetzt wird oder aus diesen heraus nach außen strömt.

4. Salzgeschmacksverstärker nach Anspruch 3, wobei das Sterol ein Sterol oder einen Sterol-Fettsäureester der folgenden allgemeinen Formel (1) enthält: 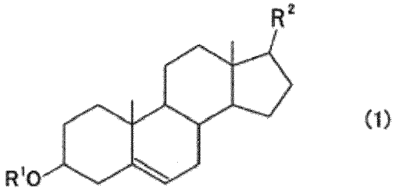 wobei R¹ ein Wasserstoffatom oder einen Fettsäurerest darstellt und R² eine Kohlenwasserstoffgruppe mit keiner Doppelbindung darstellt.

5. Salzgeschmacksverstärker nach Anspruch 4, wobei das Sterol oder der Sterol-Fettsäureester ein ß-Sitosterol oder ein ß-Sitosterol-Fettsäureester ist.

6. Salzgeschmacksverstärker nach einem der Ansprüche 1 bis 5, wobei die Liliengewächs-Nahrungspflanze eine Zwiebel ist.

7. Salzgeschmacksverstärker nach einem der Ansprüche 1 bis 6, wobei das fein gemahlene Pflanzengewebeprodukt der Liliengewächs-Nahrungspflanze durch Mahlen einer Liliengewächs-Nahrungspflanze, Auspressen einer Liliengewächs-Nahrungspflanze, um Saft zu extrahieren, Ausführen einer Enzymbehandlung an einer rohen Liliengewächs-Nahrungspflanze oder Zusetzen von Wasser zu einer getrockneten Liliengewächs-Nahrungspflanze und dann Ausführen einer Enzymbehandlung erhalten wird.

8. Salzgeschmacksverstärker nach einem der Ansprüche 1 bis 7, wobei die Geschmackskomponente einen durch Kochen unter Hitze verstärkten Geschmack aufweist.

9. Salzgeschmacksverstärker nach einem der Ansprüche 1 bis 8, wobei eine Peakfläche von Essigsäure 0,28-fach oder weniger einer Peakfläche von Dekan ist, wenn 1 ppm des Dekans zu dem Salzgeschmacksverstärker in einem Gaschromatographen zugesetzt wird.

10. Salzgeschmacksverstärker nach einem der Ansprüche 1 bis 9, der als schwefelhaltige Verbindung mindestens ein Produkt von Thiophenen und Sulfiden aufweist.

11. Salzgeschmacksverstärker nach einem der Ansprüche 1 bis 10, der in einem Zustand einer Feuchtigkeit enthaltenden Paste vorliegt.

12. Salzgeschmacksverstärker nach einem der Ansprüche 1 bis 11, der einen Exzipienten aufweist und in dem Zustand eines Pulvers vorliegt.

13. Verfahren zur Herstellung eines Salzgeschmacksverstärkers, umfassend das Erwärmen einer Flüssigkeit einer zerstampften Liliengewächs-Nahrungspflanze in Form einer Zwiebel und/oder von Knoblauch, des Safts einer Liliengewächs-Nahrungspflanze in Form einer Zwiebel und/oder von Knoblauch, einer enzymbehandelten Flüssigkeit einer Liliengewächs-Nahrungspflanze in Form einer Zwiebel und/oder von Knoblauch oder eines Konzentrats davon, um den Salzgeschmacksverstärker nach einem der Ansprüche 1 bis 10 zu erhalten.

14. Verfahren zur Herstellung eines Salzgeschmacksverstärkers nach Anspruch 13, umfassend die folgenden Schritte:
Einbringen der Flüssigkeit einer zerstampften Liliengewächs-Nahrungspflanze in Form einer Zwiebel und/oder von Knoblauch, des Safts einer Liliengewächs-Nahrungspflanze in Form einer Zwiebel und/oder von Knoblauch, der enzymbehandelten Flüssigkeit einer Liliengewächs-Nahrungspflanze in Form einer Zwiebel und/oder von Knoblauch oder des Konzentrats davon in ein Heizgefäß in einer Heizeinrichtung, wobei ein zwangsweiser Kontakt mit einer Heizfläche in dem Gefäß bewirkt wird; und Kochen unter Hitze während der Bewegung entlang der Heizfläche in einem Zustand, in dem die Flüssigkeit, der Saft oder das Konzentrat fast gleichförmig in einen Zustand eines dünnen Films expandiert ist.

15. Verfahren zur Herstellung eines Salzgeschmacksverstärkers nach Anspruch 13 oder 14, wobei die Heiztemperatur 160 °C oder höher ist.

16. Verfahren zum Verstärken eines Salzgeschmacks eines Nahrungsmittels und eines Getränks, umfassend das Zusetzen des Salzgeschmacksverstärkers nach einem der Ansprüche 1 bis 12 zu dem Nahrungsmittels und dem Getränk.

## Revendications

1. Renforceur de goût salé comprenant un produit de tissu végétal finement broyé d'un légume de liliacée d'oignon et/ou d'un ail dans lequel au moins une partie des parois cellulaires est détruite et qui passe à travers une taille de 140 mesh (140 mesh ; États-Unis) et un composant de saveur comprenant un produit de réaction de Maillard comprenant des furannes choisis parmi le furfural, le 2-acétylfuranne, le 5-méthylfurfural ou l'alcool furfurylique, et la surface du pic total des furannes est de 2,0 fois ou plus d'une surface de pic de décane lorsque 1 ppm du décane est ajouté au renforceur de goût salé dans un chromatographe gazeux, et un composé contenant du soufre dans lequel le composé contenant du soufre est le trisulfure de diméthyle, le disulfure de diméthyle ou le disulfure d'allylméthyle, et la surface du pic total des composés contenant du soufre est de 2,76 fois ou plus d'une surface de pic de décane lorsque 1 ppm du décane est ajouté au renforceur de goût salé dans un chromatographe gazeux.

2. Renforceur de goût salé selon la revendication 1, qui comprend le produit de tissu végétal finement broyé à une teneur de 0,9 à 10,0 % en poids en termes de matière sèche.

3. Renforceur de goût salé selon la revendication 1 ou 2, dans lequel le produit de tissu végétal finement broyé comprend un stérol qui existe dans un état dans lequel il est exposé de ou s'écoule hors des parois cellulaires détruites vers l'extérieur.

4. Renforceur de goût salé selon la revendication 3, dans lequel le stérol comprend un stérol ou un stérol ester d'acide gras montré par la formule générale (1) suivante : 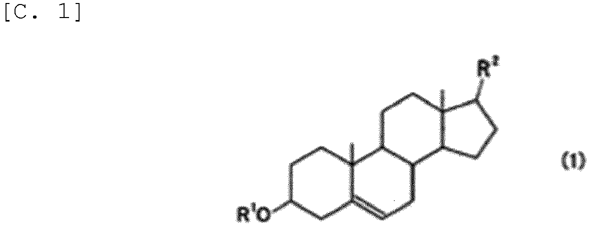 dans laquelle R¹ représente un atome d'hydrogène ou un résidu d'acide gras, et R² représente un groupe hydrocarbure ne comprenant pas de double liaison.

5. Renforceur de goût salé selon la revendication 4, dans lequel le stérol ou le stérol ester d'acide gras est un b-sitostérol ou un b-sitostérol ester d'acide gras.

6. Renforceur de goût salé selon l'une quelconque des revendications 1 à 5, dans lequel le légume de liliacée est l'oignon.

7. Renforceur de goût salé selon l'une quelconque des revendications 1 à 6, dans lequel le produit de tissu végétal finement broyé du légume de liliacée est obtenu en broyant un légume de liliacée, en pressant un légume de liliacée pour extraire le jus, en soumettant un légume de liliacée brut à un traitement enzymatique, ou en ajoutant de l'eau à un légume de liliacée séché puis en le soumettant à un traitement enzymatique.

8. Renforceur de goût salé selon l'une quelconque des revendications 1 à 7, dans lequel le composant de saveur a une saveur renforcée par la cuisson avec de la chaleur.

9. Renforceur de goût salé selon l'une quelconque des revendications 1 à 8, dans lequel une surface de pic d'acide acétique est de 0,28 fois ou moins d'une surface de pic de décane lorsque 1 ppm du décane est ajouté au renforceur de goût salé dans un chromatographe gazeux.

10. Renforceur de goût salé selon l'une quelconque des revendications 1 à 9, qui comprend, comme composé contenant du soufre, au moins un produit de thiophènes et de sulfures.

11. Renforceur de goût salé selon l'une quelconque des revendications 1 à 10, qui est dans l'état d'une pâte contenant de l'humidité.

12. Renforceur de goût salé selon l'une quelconque des revendications 1 à 11, qui comprend un excipient et est dans l'état d'une poudre.

13. Procédé de production d'un renforceur de goût salé, comprenant le chauffage du liquide d'un légume de liliacée en purée d'oignon et/ou d'un ail, le jus d'un légume de liliacée d'oignon et/ou d'un ail, le liquide traité enzymatiquement d'un légume de liliacée d'oignon et/ou d'un ail, ou un de ses concentrés pour obtenir le renforceur de goût salé selon l'une quelconque des revendications 1 à 10.

14. Procédé de production d'un renforceur de goût salé selon la revendication 13, comprenant les étapes de : introduction du liquide d'un légume de liliacée d'oignon et/ou d'un ail en purée, du jus d'un légume de liliacée d'oignon et/ou d'un ail, du liquide traité enzymatiquement d'un légume de liliacée d'oignon et/ou d'un ail ou un de ses concentrés dans un récipient de chauffage dans un dispositif de chauffage ; sa mise forcée en contact avec une surface de chauffage fournie dans le récipient ; et sa cuisson avec de la chaleur pendant qu'il est déplacé le long de la surface de chauffage dans un état dans lequel il est pratiquement uniformément étendu en un état de film mince.

15. Procédé de production d'un renforceur de goût salé selon la revendication 13 ou 14, dans lequel une température de chauffage est de 160 °C ou plus.

16. Procédé de renforcement d'un goût salé d'aliment et de boisson, comprenant l'addition du renforceur de goût salé selon l'une quelconque des revendications 1 à 12 à l'aliment et la boisson.
